(19) Europäisches Patentamt / European Patent Office / Office européen des brevets

(11) **EP 4 694 489 A1**

(12) **EUROPEAN PATENT APPLICATION**
published in accordance with Art. 153(4) EPC

(43) Date of publication:
**11.02.2026 Bulletin 2026/07**

(21) Application number: **24785125.6**

(22) Date of filing: **01.04.2024**

(51) International Patent Classification (IPC):
**H04W 72/232** (2023.01)   **H04W 72/231** (2023.01)
**H04L 5/00** (2006.01)   **H04W 72/12** (2023.01)
**H04B 7/0413** (2017.01)

(52) Cooperative Patent Classification (CPC):
**H04B 7/0413; H04L 5/00; H04W 72/12;
H04W 72/231; H04W 72/232**

(86) International application number:
**PCT/KR2024/004137**

(87) International publication number:
**WO 2024/210418 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.04.2023 KR 20230045718
25.09.2023 KR 20230128062**

(71) Applicant: **LG Electronics Inc.**
**Yeongdeungpo-gu**
**Seoul 07336 (KR)**

(72) Inventors:
• **KIM, Seonwook**
  **Seoul 06772 (KR)**
• **YANG, Suckchel**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **DEVICE AND METHOD FOR USING ONE PIECE OF DOWNLINK CONROL INFORMATION IN ORDER TO SCHEDULE PLURALITY OF SERVING CELLS IN WIRELESS COMMUNICATION SYSTEM**

(57) The objective of the present disclosure is to use one piece of downlink control information (DCI) in order to schedule a plurality of serving cells in a wireless communication system. This method performed by means of a terminal may comprise the steps of: receiving first information for setting at least one transmission configuration indication (TCI) state for each cell; receiving second information related to the mapping of a TCI state to a first type code point for single cell scheduling; receiving third information related to the mapping of first type code points to a second type code point for multiple cell scheduling; receiving DCI for the multiple cell scheduling; and communicating with at least one from among a plurality of cells on the basis of the DCI.

FIG. 23

Description

## TECHNICAL FIELD

The following description relates to a wireless communication system, and to a device and method for scheduling multiple serving cells using one downlink control information (DCI) in a wireless communication system.

## BACKGROUND ART

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

## DISCLOSURE

## TECHNICAL PROBLEM

The present disclosure relates to a device and a method for effectively scheduling a plurality of cells by using one downlink control information (DCI) in a wireless communication system.

The present disclosure relates to a device and a method for correctly interpreting a DCI for scheduling a plurality of serving cells in a wireless communication system.

The present disclosure relates to a device and a method for determining a cell-specific transmission configuration indication (TCI) state indicated by TCI state information included in a DCI for scheduling a plurality of serving cells in a wireless communication system.

The present disclosure relates to a device and a method for coping with a situation in which TCI state information included in a DCI for scheduling a plurality of serving cells in a wireless communication system indicates a deleted TCI state.

The present disclosure relates to a device and a method for determining a replacement TCI state of a deleted TCI state indicated by TCI state information included in a DCI for scheduling a plurality of serving cells in a wireless communication system.

The present disclosure relates to a device and a method for determining validity of scheduling information for a cell related to a deleted TCI state indicated by TCI state information included in a DCI for scheduling a plurality of serving cells in a wireless communication system.

The present disclosure relates to a device and a method for responding to a situation in which TCI state information included in a DCI for scheduling a plurality of serving cells in a wireless communication system indicates a plurality of TCI states.

The present disclosure relates to a device and a method for determining one valid TCI state among a plurality of TCI states indicated by TCI state information included in a DCI for scheduling a plurality of serving cells in a wireless communication system.

The present disclosure relates to a device and a method for determining validity of scheduling information for a cell related to a plurality of TCI states indicated by TCI state information included in a DCI for scheduling a plurality of serving cells in a wireless communication system.

The present disclosure relates to a device and a method for updating a configuration related to TCI state information included in a DCI for scheduling a plurality of serving cells in a wireless communication system.

The present disclosure relates to a device and a method for determining a size of a parameter related to demodulation reference signal (DMRS) included in a DCI for scheduling a plurality of serving cells in a wireless communication system.

The technical objectives to be achieved in the present disclosure are not limited to the matters mentioned above, and other technical tasks not mentioned may be considered by those skilled in the art in the technical field to which the technical configuration of the present disclosure is applied, from the embodiments of the present disclosure to be described below.

## TECHNICAL SOLUTION

In one example of the present disclosure, a method performed by a UE in a wireless communication system may comprise: receiving first information for configuring at least one transmission configuration indication (TCI) state per cell; receiving second information related to a mapping of first type code point to TCI state for a single-cell scheduling; receiving third information related to a mapping of second type code point to first type code point for a multi-cell scheduling; receiving downlink control information (DCI) for the multi-cell scheduling; and performing communication with at least one of a plurality of cells based on the DCI. When first type code point related to a first cell among first code points indicated by second type code point included in the DCI is mapped to a plurality of TCI states, an operation of determining at least one TCI state applied to the first cell or an operation of determining whether a scheduling of the first cell is valid may be performed.

In one example of the present disclosure, a method performed by a UE in a wireless communication system may comprise a transceiver and a processor connected to the transceiver, wherein the processor may be configured to: receive first information for configuring at least one transmission configuration indication (TCI) state per cell; receive second information related to a mapping of first type code point to TCI state for a single-cell scheduling; receive third information related to a mapping of second type code point to first type code point for a multi-cell scheduling; receive downlink control information (DCI) for the multi-cell scheduling; and perform communication with at least one of a plurality of cells based on the DCI, wherein, when first type code point related to a first cell among first code points indicated by second type code point included in the DCI is mapped to a plurality of TCI states, an operation of determining at least one TCI state applied to the first cell or an operation of determining whether a scheduling of the first cell is valid may be performed.

In one example of the present disclosure, a communication device may comprise at least one processor, and at least one computer memory connected to the at least one processor and storing instructions that direct operations when executed by the at least one processor, the operations comprising: receiving first information for configuring at least one transmission configuration indication (TCI) state per cell; receiving second information related to a mapping of first type code point to TCI state for a single-cell scheduling; receiving third information related to a mapping of second type code point to first type code point for a multi-cell scheduling; receiving downlink control information (DCI) for the multi-cell scheduling; and performing communication with at least one of a plurality of cells based on the DCI. When first type code point related to a first cell among first code points indicated by second type code point included in the DCI is mapped to a plurality of TCI states, an operation of determining at least one TCI state applied to the first cell or an operation of determining whether a scheduling of the first cell is valid may be performed.

In one example of the present disclosure, a non-transitory computer-readable medium storing at least one instruction may comprise the at least one instruction executable by a processor, wherein the at least one instruction causing a device, the processor, to: receive first information for configuring at least one transmission configuration indication (TCI) state per cell; receive second information related to a mapping of first type code point to TCI state for a single-cell scheduling; receive third information related to a mapping of second type code point to first type code point for a multi-cell scheduling; receive downlink control information (DCI) for the multi-cell scheduling; and perform communication with at least one of a plurality of cells based on the DCI, wherein, when first type code point related to a first cell among first code points indicated by second type code point included in the DCI is mapped to a plurality of TCI states, an operation of determining at least one TCI state applied to the first cell or an operation of determining whether a scheduling of the first cell is valid may be performed.

The aspects described above of the present disclosure are merely some of the preferred embodiments of the present disclosure, and various embodiments reflecting the technical features of the present disclosure may be derived and understood by those skilled in the art based on the detailed description of the present disclosure described below.

## ADVANTAGEOUS EFFECTS

The following effects may be achieved by embodiments based on the present disclosure.

According to the present disclosure, scheduling may be effectively performed using downlink control information (DCI) for scheduling multiple cells.

The effects obtainable from the embodiments of the present disclosure are not limited to the effects mentioned above, and other effects not mentioned may be clearly derived and understood by those skilled in the art to which the technical configuration of the present disclosure is applied from the description of the embodiments of the present disclosure below. That is, unintended effects resulting from implementing the configuration described in the present disclosure may also be derived by those skilled in the art from the embodiments of the present disclosure.

**BRIEF DESCRIPTION OF THE DRAWINGS**

FIG. 1 illustrates an example of a structure of a wireless communication system to which the present disclosure may be applied.

FIG. 2 illustrates an example of a wireless device applicable to the present disclosure.

FIG. 3 illustrates a frame structure in a wireless communication system to which the present disclosure may be applied.

FIG. 4 illustrates an example of a resource grid in a wireless communication system to which the present disclosure may be applied.

FIG. 5 illustrates an example of a physical resource block in a wireless communication system to which the present disclosure may be applied.

FIG. 6 illustrates an example of a slot structure in a wireless communication system to which the present disclosure may be applied.

FIG. 7 illustrates examples of physical channels used in a wireless communication system, to which the present disclosure may be applied, and an example of a general signal transmission and reception method using the physical channels.

FIG. 8 illustrates a diagram illustrating an example in which a physical channel is mapped in a slot to which various embodiments are applicable.

FIG. 9 illustrates an example of beams applicable to the present disclosure.

FIG. 10 illustrates an example of a downlink (DL) beam management (BM) procedure using a synchronization signal block (SSB) applicable to the present disclosure.

FIG. 11 illustrates an example of a DL BM procedure using a channel state information (CSI) reference signal (RS) applicable to the present disclosure.

FIG. 12 illustrates an example of a receive beam determination procedure of a UE applicable to the present disclosure.

FIG. 13 illustrates an example of a transmit beam determination procedure of a base station applicable to the present disclosure.

FIG. 14 illustrates an example of resource allocation in a time and frequency domain applicable to the present disclosure.

FIG. 15 illustrates an example of beam sweeping for uplink (UL) BM using a sounding reference signal (SRS) applicable to the present disclosure.

FIG. 16 illustrates an example of a UL BM procedure using an SRS applicable to the present disclosure.

FIG. 17 illustrates an example of a downlink data transmission procedure that may be applied to the present disclosure.

FIG. 18 illustrates an example of an uplink data transmission procedure that may be applied to the present disclosure.

FIG. 19 illustrates an example of a procedure for processing multi-cell scheduling information indicating a deleted code point according to an embodiment of the present disclosure.

FIG. 20 illustrates an example of a procedure for updating code point mapping information for multi-cell scheduling according to an embodiment of the present disclosure.

FIG. 21 illustrates an example of a procedure for interpreting TCI state information for multi-cell scheduling according to an embodiment of the present disclosure.

FIG. 22 illustrates an example of a procedure for interpreting multi-cell scheduling information in consideration of a size of a DMRS sequence initialization field according to an embodiment of the present disclosure.

FIG. 23 illustrates an example of a procedure for performing communication by using multi-cell scheduling information according to an embodiment of the present disclosure.

**MODE FOR INVENTION**

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial.

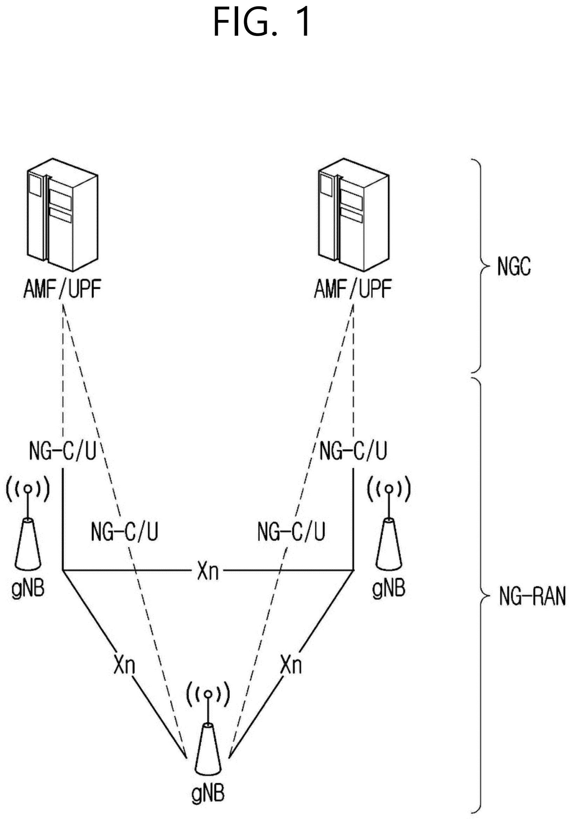

FIG. 1 exemplifies a structure of a wireless communication system to which the present disclosure may be applied. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

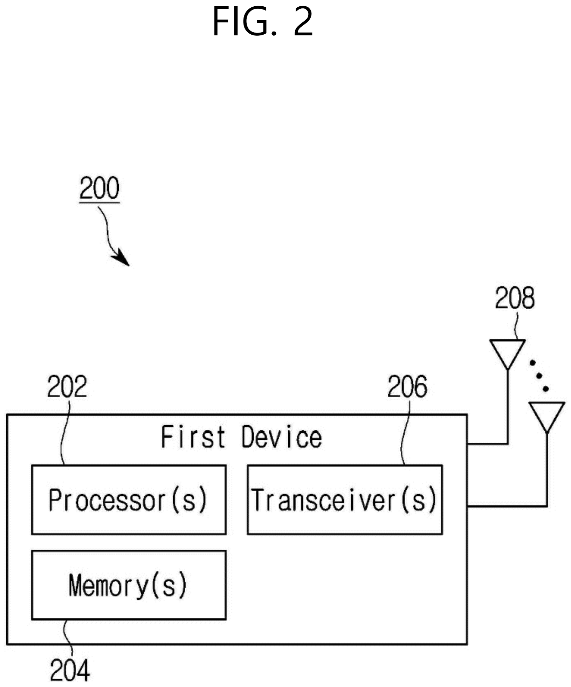

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods,

and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

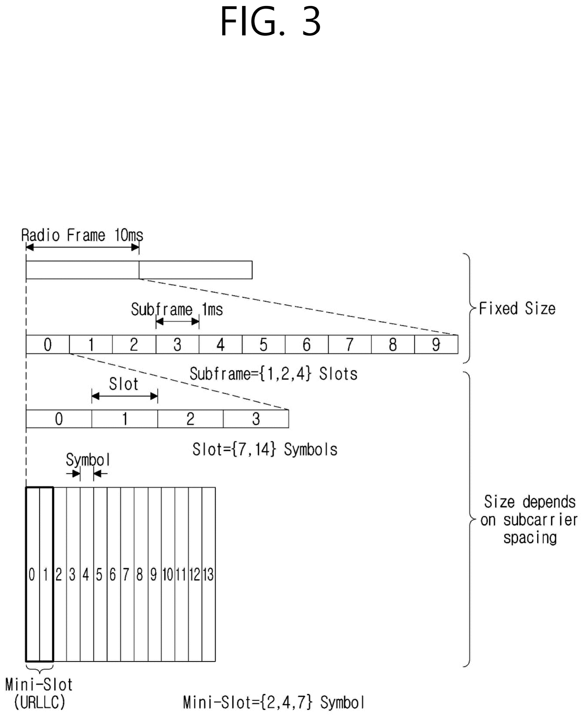

FIG. 3 exemplifies a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer $N$ (or $\mu$). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15[kHz]$ | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise. An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of $T_c=1/(\Delta f_{max} \cdot N_f)$. Here, $\Delta f_{max}$ is $480 \cdot 10^3$Hz and $N_f$ is 4096. Downlink and uplink transmission is configured (organized) with a radio frame having a duration of $T_f=1/(\Delta f_{max} \cdot N_f/100)T_c=10$ms. Here, the radio frame is configured with 10 subframes having a duration of $T_{sf}=(\Delta f_{max} \cdot N_f/1000)T_c=1$ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^\mu \in \{O, ..., N_{slot}^{subtrame,\mu}-1\}$ in a subframe and are numbered in an increasing order of $n_{s,f}^\mu \{0,\cdots, N_{slot}^{subframe,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that not all OFDM symbols of a downlink slot or an uplink slot are available.

Table 3 represents the number of OFDM symbols per slot ($N_{symb}^{slot}$), the number of slots per radio frame ($N_{slot}^{frame,\mu}$) and the number of slots per subframe ($N_{slot}^{subtrame,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subtrame,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 3 is an example on $\mu=2$ (SCS is 60 kHz), and referring to Table 3, 1 subframe may include 4 slots. 1 subframe={1,2,4} slot shown in FIG. 3 is an example, and the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

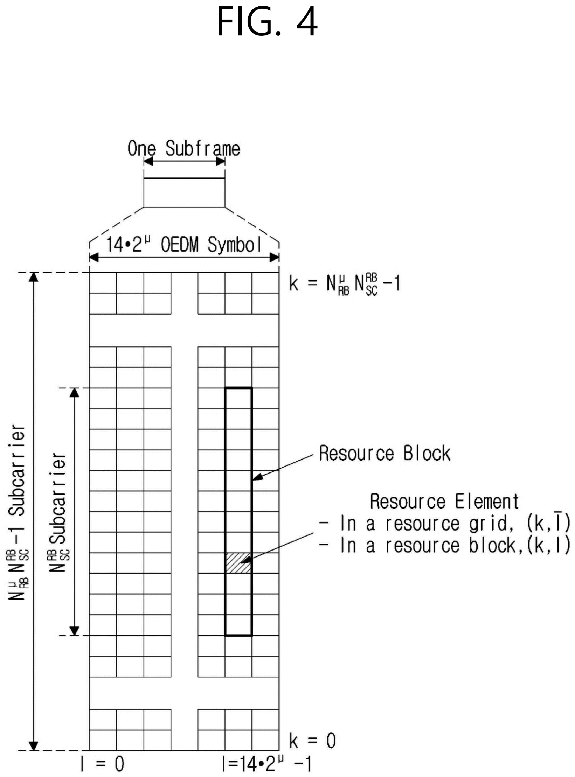

FIG. 4 exemplifies a resource grid in a wireless communication system to which the present disclosure may be applied.

Referring to FIG. 4, as an illustrative description, a resource grid is configured with $N_{RB}^\mu N_{SC}^{RB}$ subcarriers in a frequency domain, and one subframe is configured with $14 \cdot 2\mu$ OFDM symbols, but the resource grid and the subframe are not limited thereto. In an NR system, a transmitted signal is described by one or more resource grids configured with $2^{\mu}N_{symb}^{(\mu)}$ OFDM symbols and $N_{RB}^{\mu}N_{SC}^{RB}$ subcarriers. Here, $N_{RS}^{\mu} \leq N_{RS}^{max,u}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k, l'). Here, k=0, ..., $N_{RS}^{\mu}N_{SC}^{RB}$-1 is an index in a frequency domain and l'=0, ..., $2^{\mu}N_{symb}^{(\mu)}$-1 refers to a position of a symbol in a subframe. When referring to a resource element in a slot, an index pair (k, l) is used. Here, l=0, ..., $2^{\mu}N_{symb}^{(\mu)}$-1. A resource element (k, l') for $\mu$ and an antenna port p corresponds to a complex value, $a_{k,f}^{(p,\mu)}$. When there is no risk of confusion or when a specific antenna port or numerology is not specified, indexes p and $\mu$ may be dropped, whereupon a complex value may be $a_{k,l'}^{'(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k, 1) for a subcarrier spacing configuration $\mu$ in a frequency domain is given as in the following Equation 1.

$$[\text{Equation 1}]$$

$$n_{CRB}^{\mu} = k/N_{sc}^{RB}$$

In Equation 1, k is defined relatively to point A so that k=0 corresponds to a subcarrier centering around point A. Physical resource blocks are numbered from 0 to $N_{BWP,i}^{size,\mu}$-1 in a bandwidth part (BWP) and i is the number of a BWP. A relationship between a physical resource block $n_{PRB}$ and a common resource block $n_{CRB}$ in BWP i is given by the following Equation 2.

$$[\text{Equation 2}]$$

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

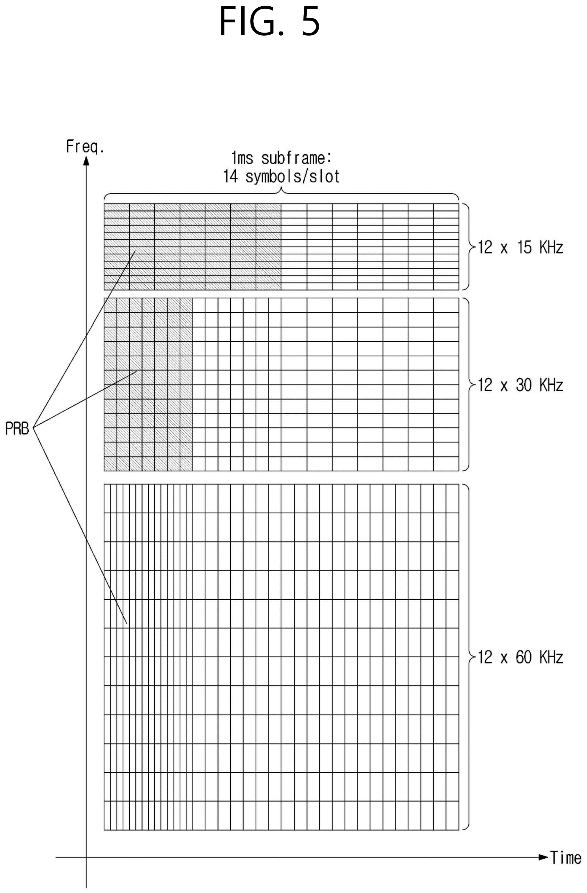

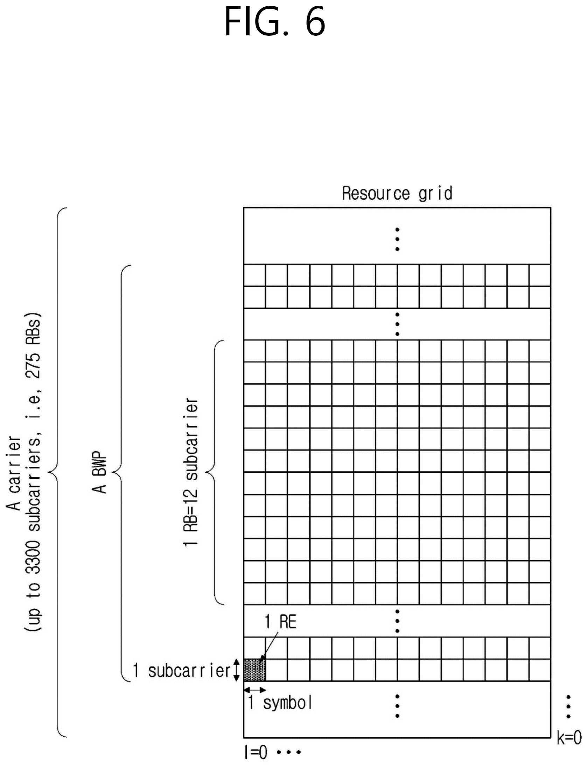

FIG. 5 exemplifies a physical resource block in a wireless communication system to which the present disclosure may be applied. In addition, FIG. 6 exemplifies a slot structure in a wireless communication system to which the present disclosure may be applied.

Referring to FIG. 5 and FIG. 6, a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

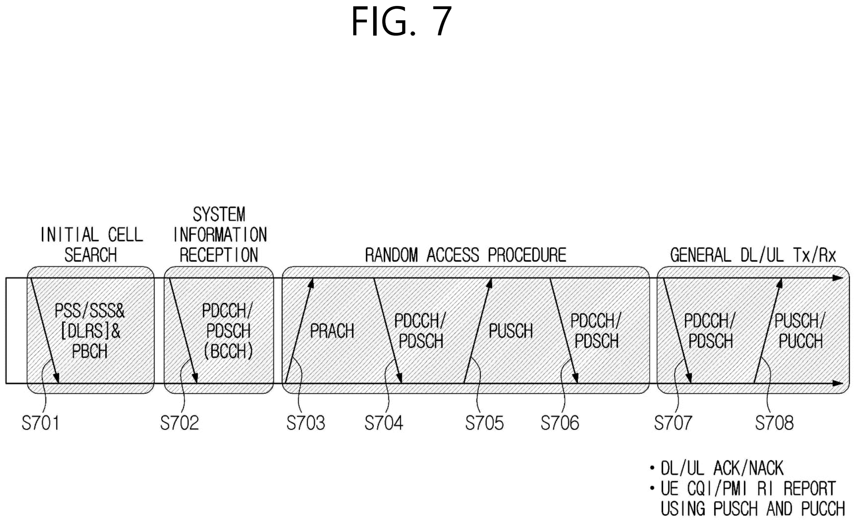

FIG. 7 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

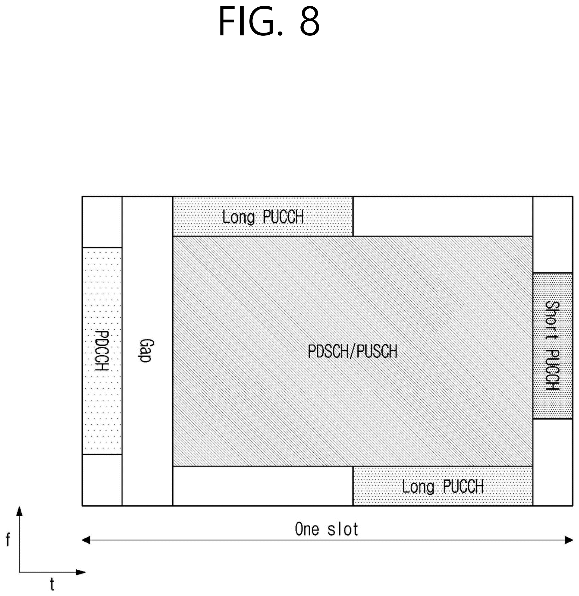

FIG. 8 is a diagram illustrating an example in which a physical channel is mapped in a slot to which various embodiments are applicable.

Referring to FIG. 8, a DL control channel, DL or UL data, UL control channel, etc. may all be included in one slot. For example, the first N symbols in a slot may be used to transmit a DL control channel (hereinafter, DL control region), and the last M symbols in a slot may be used to transmit a UL control channel (hereinafter, UL control region). N and M are each an integer greater than or equal to 0. A resource region (hereinafter, referred to as a data region) between the DL control region and the UL control region may be used for DL data transmission or for UL data transmission. A time gap for DL-to-UL or UL-to-DL switching may exist between the control region and the data region. The PDCCH may be transmitted in the DL control region, and the PDSCH may be transmitted in the DL data region. Some symbols at the time of switching from DL to UL in a slot may be used as a time gap.

DL Physical Channel/Signal

(1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

(2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time/frequency resource allocation information on a higher layer control message such as a random access response (RAR) transmitted over a PDSCH; transmit power control commands; and information on activation/deactivation of SPS/CS. Various DCI formats may be provided depending on information in DCI.

Table 5 shows DCI formats transmitted over the PDCCH.

[Table 5]

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 1_0 | Scheduling of PDSCH in one cell |
| 1_1 | Scheduling of PDSCH in one cell, and/or triggering one shot HARQ-ACK codebook feedback |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a CBG-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or UL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs.

The PDCCH/DCI may include a cyclic redundancy check (CRC), and the CRC may be masked/scrambled with various identifiers (e.g., radio network temporary identifier (RNTI)) according to the owner or purpose of the PDCCH. For example, if the PDCCH is for a specific UE, the CRC may be masked with a cell-RNTI (C-RNTI). If the PDCCH relates to paging, the CRC may be masked with a paging-RNTI (P-RNTI). If the PDCCH relates to system information (e.g., system information block (SIB)), the CRC may be masked with a system information RNTI (SI-RNTI). If the PDCCH relates to a random access response, the CRC may be masked with a random access-RNTI (RA-RNTI).

Table 6 shows the usage of the PDCCH and transport channels according to the type of RNTI. Here, the transport channel means a transport channel related to data carried by a PDSCH/PUSCH scheduled by the PDCCH.

[Table 6]

| RNTI | Usage | Transport Channel |
|---|---|---|
| P-RNTI | Paging and System Information change notification | PCH (Paging Channel) |
| SI-RNTI | Broadcast of System Information | DL-SCH |
| RA-RNTI | Random Access Response | DL-SCH |
| Temporary C-RNTI | Contention Resolution (when no valid C-RNTI is available) | DL-SCH |
| Temporary C-RNTI | Msg3 transmission | UL-SCH |
| C-RNTI, MCS (Modulation and Coding Scheme)-C-RNTI | Dynamically scheduled unicast transmission | UL-SCH |
| C-RNTI | Dynamically scheduled unicast transmission | DL-SCH |
| MCS-C-RNTI | Dynamically scheduled unicast transmission | DL-SCH |
| C-RNTI | Triggering of PDCCH ordered random access | N/A |
| CS (Configured Scheduling)-RNTI | Configured scheduled unicast transmission (activation, reactivation and retransmission) | DL-SCH, UL-SCH |
| CS-RNTI | Configured scheduled unicast transmission(deactivation) | N/A |
| TPC (Transmit Power Control)-PUCCH-RNTI | PUCCH power control | N/A |
| TPC-PUSCH-RNTI | PUSCH power control | N/A |
| TPC-SRS-RNTI | SRS trigger and power control | N/A |
| INT(Interruption)-RNTI | Indication pre-emption in DL | N/A |
| SFI (Slot Format Indication)-RNTI | Slot Format Indication on the given cell | N/A |
| SP (Semi-persistent)-CSI (Channel State Information)-RNTI | Activation of Semi-persistent CSI reporting on PUSCH | N/A |

For the PDCCH, a fixed modulation scheme may be used (e.g., quadrature phase shift keying (QPSK)). One PDCCH may include 1, 2, 4, 8, or 16 control channel elements (CCEs) depending on the aggregation level (AL). One CCE may include 6 resource element groups (REGs), and one REG may be defined by one OFDMA symbol and one (P)RB.

The PDCCH may be transmitted in a control resource set (CORESET). The CORESET corresponds to a set of physical resources/parameters used to carry the PDCCH/DCI within a BWP. For example, the CORESET may include a set of REGs with a given numerology (e.g., SCS, CP length, etc.). The CORESET may be configured by system information (e.g., MIB) or UE-specific higher layer (e.g., RRC) signaling. For example, the following parameters/information may be used to configure the CORESET. One UE may be configured with one or more CORESETs, and a plurality of CORESETs may overlap in the time/frequency domain.

- controlResourceSetId: this parameter/information indicates the identifier (ID) of the CORESET.
- frequencyDomainResources: this parameter/information indicates frequency-domain resources of the CORESET. The frequency-domain resources may be indicated by a bitmap, and each bit corresponds to an RB group (=6 consecutive RBs). For example, the most significant bit (MSB) of the bitmap corresponds to the first RB group in the BWP. An RB group corresponding to a bit with a value of 1 may be allocated as a frequency-domain resource of the CORESET.
- duration: this parameter/information indicates time-domain resources of the CORESET. The parameter/information duration may indicate the number of consecutive OFDMA symbols included in the CORESET. For example, duration has a value of 1-3.
- cce-REG-MappingType: this parameter/information indicates a CCE-to-REG mapping type. An interleaved type and a non-interleaved type may be supported.
- precoderGranularity: this parameter/information indicates a precoder granularity in the frequency domain.
- tci-StatesPDCCH: this parameter/information indicates information (e.g., TCI-StateID) on a transmission configuration indication (TCI) state for the PDCCH. The TCI state may be used to provide a quasi-co-location (QCL) relationship between DL RS(s) in an RS set (TCI-state) and a PDCCH DMRS port.

- tci-PresentInDCI: this parameter/information indicates whether a TCI field is included in DCI.
- pdcch-DMRS-ScramblingID: this parameter/information indicates information used for initialization of a PDCCH DMRS scrambling sequence.

For PDCCH reception, the UE may monitor (e.g., blind decoding) a set of PDCCH candidates in the CORESET. The PDCCH candidate may mean CCE(s) monitored by the UE for PDCCH reception/detection. PDCCH monitoring may be performed in one or more CORESETs in an active DL BWP on each active cell in which the PDCCH monitoring is configured. The set of PDCCH candidates monitored by the UE may be defined as a PDCCH search space (SS) set. The SS set may be classified into a common search space (CSS) set or a UE-specific search space (USS) set.

Table 7 shows PDCCH search spaces.

[Table 7]

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | PagingSystem Information change notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.

- searchSpaceId: this parameter/information indicates the ID of the SS set.
- controlResourceSetId: this parameter/information indicates the CORESET associated with the SS set.
- monitoringSlotPeriodicityAndOffset: this parameter/information indicates a PDCCH monitoring periodicity (in a unit of slot) and a PDCCH monitoring offset (in a unit of slot)
- monitoringSymbolsWithinSlot: this parameter/information indicates first OFDMA symbol(s) for PDCCH monitoring in a slot in which the PDCCH monitoring is configured. The first OFDMA symbol(s) are indicated by a bitmap, and each bit corresponds to each OFDMA symbol in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: this parameter/information indicates the number of PDCCH candidates (e.g., one of 0, 1, 2, 3, 4, 5, 6, and 8) for each AL (where AL={1, 2, 4, 8, 16}).
- searchSpaceType: this parameter/information indicates whether the SS type is the CSS or USS.
- DCI format: this parameter/information indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

Uplink (UL) Physical Channels/Signals

(1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

(2) PUCCH

A PUCCH may carry UCI. The UCI includes the following information.
Scheduling request (SR): The SR is information used to request a UL-SCH resource.
Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
Channel Status Information (CSI): The CSI is feedback information on a DL channel. The CSI includes a channel quality indicator (CQI), a rank indicator (RI), a precoding matrix indicator (PMI), a precoding type indicator (PTI), and so on.
Table 8 shows PUCCH formats. The PUCCH formats may be classified according to UCI payload sizes/transmission lengths (e.g., the number of symbols included in a PUCCH resource) and/or transmission structures. The PUCCH formats may be classified into short PUCCH formats (PUCCH formats 0 and 2) and long PUCCH formats (PUCCH formats 1, 3, and 4) according to the transmission lengths.

[Table 8]

| PUCCH format | Length in OFDM symbols $N_{symb}^{PUCCH}$ | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

(0) PUCCH Format 0 (PF0)

- Supportable UCI payload size: up to K bits (e.g., K=2)
- Number of OFDM symbols included in one PUCCH: 1 to X symbols (e.g., X=2)
- Transmission structure: only a UCI signal is configured with no DM-RS, and a UCI state is transmitted by selecting and transmitting one of a plurality of sequences.

(1) PUCCH Format 1 (PF1)

- Supportable UCI payload size: up to K bits (e.g., K=2)
- Number of OFDM symbols included in one PUCCH: Y to Z symbols (e.g., Y=4 and Z=14)
- Transmission structure: UCI and a DM-RS are configured in different OFDM symbols based on time division multiplexing (TDM). For the UCI, a specific sequence is multiplied by a modulation symbol (e.g., QPSK symbol). A cyclic shift/orthogonal cover code (CS/OCC) is applied to both the UCI and DM-RS to support code division multiplexing (CDM) between multiple PUCCH resources (complying with PUCCH format 1) (in the same RB).

(2) PUCCH Format 2 (PF2)

- Supportable UCI payload size: more than K bits (e.g., K=2)
- Number of OFDM symbols included in one PUCCH: 1 to X symbols (e.g., X=2)
- Transmission structure: UCI and a DMRS (DM-RS) are configured/mapped in/to the same symbol based on frequency division multiplexing (FDM), and encoded UCI bits are transmitted by applying only an inverse fast Fourier transform (IFFT) thereto with no DFT.

(3) PUCCH Format 3 (PF3)

- Supportable UCI payload size: more than K bits (e.g., K=2)
- Number of OFDM symbols included in one PUCCH: Y to Z symbols (e.g., Y=4 and Z=14)
- Transmission structure: UCI and a DMRS are configured/mapped in/to different symbols based on TDM. Encoded UCI bits are transmitted by applying a DFT thereto. To support multiplexing between multiple UEs, an OCC is applied to the UCI, and a CS (or interleaved frequency division multiplexing (IFDM) mapping) is applied to the DM-RS before the DFT.

(4) PUCCH Format 4 (PF4 or F4)

- Supportable UCI payload size: more than K bits (e.g., K=2)
- Number of OFDM symbols included in one PUCCH: Y to Z symbols (e.g., Y=4 and Z=14)
- Transmission structure: UCI and a DMRS are configured/mapped in/to different symbols based on TDM. The DFT is applied to encoded UCI bits with no multiplexing between UEs.

Beam Management (BM)

The BM procedure is an L1 (layer 1) / L2 (layer 2) procedure for obtaining and maintaining a set of base station (e.g., gNB, TRP, etc.) and/or terminal (e.g., UE) beams that may be used for downlink (DL) and uplink (UL) transmission/reception, and may include the following procedures and terms.

- Beam measurement: The operation in which a base station or a UE measures characteristics of a received beam forming signal.
- Beam determination: The operation in which a base station or a UE selects its transmit beam (Tx beam) / receive beam (Rx beam).
- Beam sweeping: The operation in which a transmit and/or receive beam is used to cover a spatial domain for a certain time interval in a predetermined manner.
- Beam report: The operation in which a UE reports information of a beamformed signal based on beam measurement.

The BM procedure may be classified into (1) a DL BM procedure using a synchronization signal (SS) / physical broadcast channel (PBCH) block or a CSI-RS, and (2) a UL BM procedure using a sounding reference signal (SRS).
In addition, each BM procedure may include Tx beam sweeping for determining a Tx beam and Rx beam sweeping for determining an Rx beam.

<DL BM>

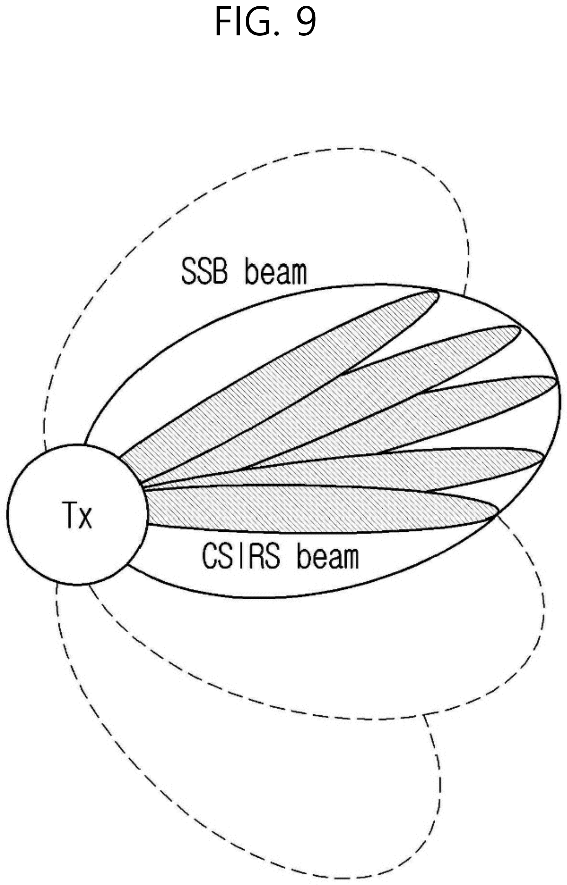

The DL BM procedure may include (1) transmission of beamformed DL reference signals (RSs) (e.g., CSI-RS or SS block (SSB)) of a base station, and (2) beam reporting of a UE.
Here, the beam reporting may include a preferred DL RS identifier (ID)(s) and a corresponding L1-reference signal received power (L1-RSRP).
The DL RS ID may be an SSB resource indicator (SSBRI) or a CSI-RS resource indicator (CRI).
As shown in FIG. 9, an SSB beam and a CSI-RS beam may be used for beam measurement. The measurement metric is L1-RSRP per resource/block. The SSB may be used for coarse beam measurement, and a CSI-RS may be used for fine beam measurement. The SSB may be used for both Tx beam sweeping and Rx beam sweeping.
The Rx beam sweeping using an SSB may be performed across a plurality of SSB bursts while the UE changes an Rx beam for the same SSBRI. Here, one SS burst includes one or more SSBs, and one SS burst set includes one or more SS bursts.

<DL BM using SSB>

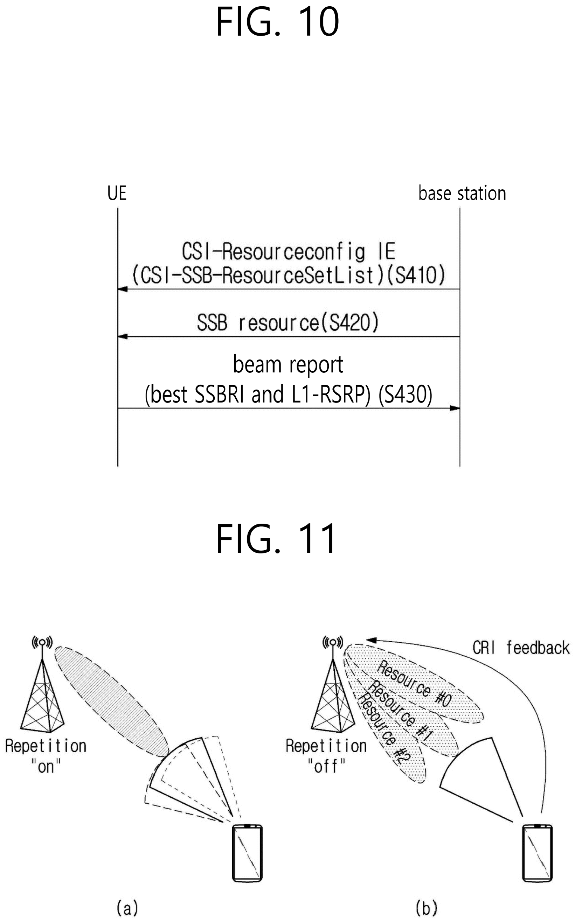

FIG. 10 is a flowchart illustrating an example of the DL BM procedure using SSB.

Configuration of a beam report using an SSB is performed upon

- The UE receives, from the base station, CSI-ResourceConfig IE including CSI-SSB-ResourceSetList which includes SSB resources used for BM (S410).

Table 9 shows an example of CSI-ResourceConfig IE, and like CSI-ResourceConfig IE in Table 9, BM configuration using an SSB is not defined additionally, and the SSB is set as a CSI-RS resource.

[Table 9]

```
-- ASN1START

-- TAG-CSI-RESOURCECONFIG-START

CSI-ResourceConfig ::=                          SEQUENCE {
csi-ResourceConfigId              CSI-ResourceConfigId,
        csi-RS-ResourceSetList              CHOICE {
            nzp-CSI-RS-SSB                      SEQUENCE {
                nzp-CSI-RS-ResourceSetList          SEQUENCE (SIZE (1..maxNrofNZP-CSI-RS-
ResourceSetsPerConfig)) OF NZP-CSI-RS-ResourceSetId OPTIONAL,
                csi-SSB-ResourceSetList             SEQUENCE (SIZE (1..maxNrofCSI-SSB-
ResourceSetsPerConfig)) OF CSI-SSB-ResourceSetId    OPTIONAL
                },
            csi-IM-ResourceSetList              SEQUENCE (SIZE (1..maxNrofCSI-IM-
ResourceSetsPerConfig)) OF CSI-IM-ResourceSetId
            },

        bwp-Id                              BWP-Id,
        resourceType                        ENUMERATED { aperiodic, semiPersistent, periodic },
        ...
    }

-- TAG-CSI-RESOURCECONFIGTOADDMOD-STOP

-- ASN1STOP
```

In Table 9, the parameter csi-SSB-ResourceSetList indicates a list of SSB resources used for beam management and reports in a single resource set. Herein, the SSB resource set may be configured as {SSBx1, SSBx2, SSBx3, SSBx4, ...}. An SSB index may be defined from 0 to 63.

- The UE receives the SSB resources from the base station based on the CSI-SSB-ResourceSetList (S420).
- When CSI-RS reportConfig for SSBRI and L1-RSRP reporting is configured, the UE (beam) reports the best SSBRI and L1-RSRP corresponding thereto to the base station (S430).

That is, when reportQuantity in the CSI-RS reportConfig IE is configured as ssb-Index-RSRP, the UE reports the best SSBRI and L1-RSRP corresponding thereto to the base station.

Then, when a CSI-RS resource is configured in an OFDM symbol(s) identical to an SSB (SS/PBCH Block) and QCL-TypeD is applicable, the UE may assume that the CSI-RS and the SSB are quasi co-located with each other in terms of "QCL-TypeD".

Herein, the QCL Type D may mean that antenna ports are QCL with each other in terms of the spatial Rx parameter. When the UE receives a plurality of DL antenna ports which are in a QCL Type D relationship with each other, it is possible to apply the same Rx beam. In addition, the UE does not expect that a CSI-RS is configured in an RE overlapping with a RE of the SSB.

<DL BM using CSI-RS>

Regarding the use of a CSI-RS, i) when a repetition parameter is configured for a specific CSI-RS resource set and TRS_info is not configured, the CSI-RS is used for beam management. ii) when the repetition parameter is not configured and TRS_info is configured, the CSI-RS is used for a tracking reference signal (TRS). iii) when the repetition parameter is not configured and TRS_info is not configured, the CSI-RS is used for CSI acquisition.

This repetition parameter may be set only for CSI-RS resource sets that are associated with CSI-ReportConfig having a report of L1 RSRP or 'No Report or None'.

If the UE receives CSI-ReportConfig in which reportQuantity is set to 'cri-RSRP' or 'none' and, CSI-Resource-Config for channel measurement (higher layer parameter 'resourcesForChannelMeasurement') does not include higher layer parameter 'trs-Info' but includes NZP-CSI-RS-ResourceSet which is set to higher layer parameter 'repetition' (repetition=ON), the UE may be composed of a port of the same number (1-port or 2-port), which includes higher layer parameter 'nrofPorts' for all CSI-RS resources in the NZP-CSI-RS-ResourceSet.

When (higher layer parameter) repetition is set to "ON," it is related to an Rx beam sweeping procedure of a UE. In this case, when the UE is configured with an NZP-CSI-RS-ResourceSet, the UE may assume that at least one CSI-RS resource in the NZP-CSI-RS-ResourceSet is transmitted through the same downlink spatial domain transmission filter. That is, at least one CSI-RS resource in the NZP-CSI-RS-ResourceSet is transmitted through the same Tx beam. Here, at least one CSI-RS resource in the NZP-CSI-RS-ResourceSet may be transmitted in different OFDM symbols. In addition, the UE is not expected to receive different periodicities in periodicityAndOffset among all CSI-RS resources in the NZP-CSI-RS-ResourceSet.

In contrast, when repetition is set to "OFF," it is related to a Tx beam sweeping procedure of a base station. In this case, when repetition is set to "OFF," the UE does not assume that at least one CSI-RS resource in the NZP-CSI-RS-ResourceSet is transmitted through the same downlink spatial domain transmission filter. That is, at least one CSI-RS resource in the NZP-CSI-RS-ResourceSet is transmitted through different Tx beams.

FIG. 11 is a diagram illustrating an example of a DL BM procedure using a CSI-RS. FIG. 11(a) shows an Rx beam determination (or refinement) procedure of a UE, and FIG. 11(b) shows a Tx beam determination procedure of a base station. In addition, FIG. 11(a) shows the case where the parameter repetition is set to "ON", and FIG. 11(b) shows the case where the parameter "repetition" is set as "OFF".

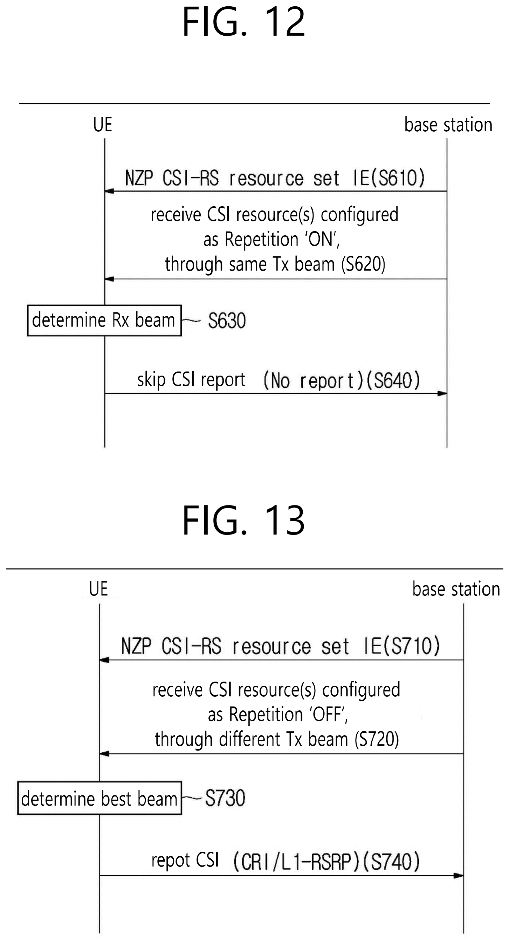

With reference to FIG. 11(a) and FIG. 12, the Rx beam determination procedure of the UE will be described.

FIG. 12 is a flowchart illustrating an example of the Rx beam determination procedure of the UE.

- The UE receives, from the base station, NZP CSI-RS resource set IE including higher layer parameter repetition through RRC signaling (S610). The parameter repetition is set to "ON".
- The UE repeatedly receives a resource(s) in a CSI-RS resource set, in which repetition is set to "ON", from a different OFDM symbol through the same Tx beam (or a DL spatial domain transmission filter) (S620).
- In doing so, the UE determines its own Rx beam (S630).
- The UE may omit a CSI report or may transmit a CSI report including CRI/L1-RSRP to the base station (S640).

That is, when the repetition is set to "ON", the UE may omit a CSI report or may report ID information (CRI) of a beam pair-related preferred beam and a quality value thereof (L1-RSRP).

With reference to FIG. 11(b) and FIG. 13, the Tx beam determination procedure of the base station will be described.

FIG. 13 is a flowchart illustrating an example of the Tx beam determination procedure of the base station.

- the UE receives, from the base station, NZP CSI-RS resource set IE including higher layer parameter repetition through RRC signaling (S710). Here, the repetition parameter is set to "OFF" and relates to a Tx beam sweeping procedure of the base station.
- the UE receives resources in a CSI-RS resource set, in which repetition is set to "OFF", via a different Tx beam (a DL spatial domain transmission filter) (S720).
- the UE selects (or determines) the best beam (S730), and
- the UE reports ID and quality information (e.g., L1-RSRP) of the selected beam to the base station (S740). In this case, reportQuantity of CSI report Config may be configured as "CRI+L1-RSRP".

That is, when the CSI-RS is transmitted for BM, the UE reports CSI and L1-RSRP corresponding thereto to the base station.

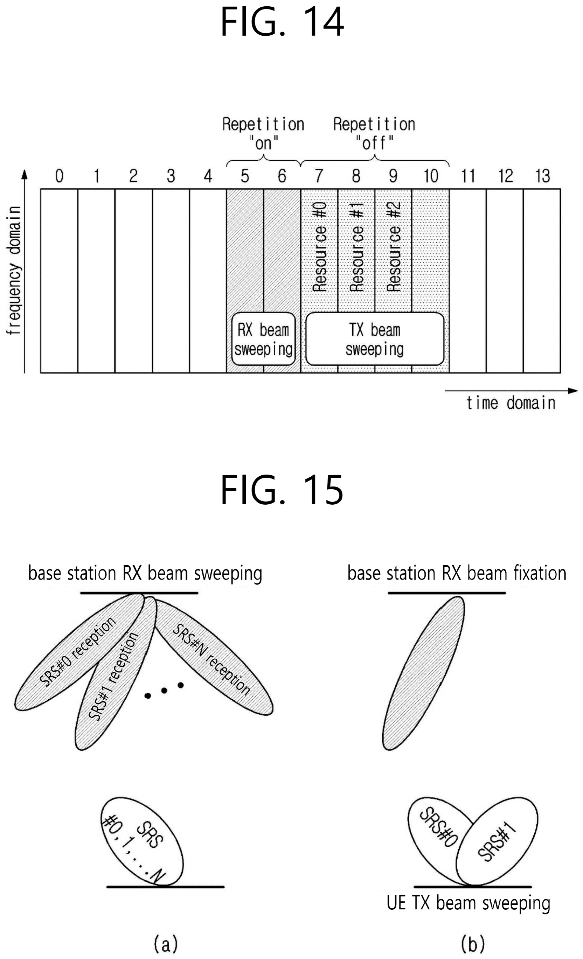

FIG. 14 is a diagram illustrating an example of resource allocation in time and frequency domains, which is related to operation of FIG. 11.

That is, when repetition is set to "ON" for a CSI-RS resource set, a plurality of CSI-RS resources is repeatedly used via the same Tx beam, and, when repetition is set to "OFF" for the CSI-RS resource set, different CSI-RS resources are transmitted via different Tx beams.

<DL BM-Related Beam Indication>

A UE may receive RRC configuration of a list of a maximum M number of candidate Transmission Configuration Indication (TCI) states at least for the purpose of Quasi Co-location (CQL) indication. Herein, M may be 64.

Each TCI state may be configured as one RS set. ID of each DL RS for a spatial QCL at least in an RS set (QCL Type D) may refer to at least one of DL RS types such as an SSB, a P-CSI RS, a SP-CSI RS, or a A-CSI RS.

Initialization/update of ID of DL RS(s) in an RS set used at least for a spatial QCL purpose may be performed at least via explicit signaling.

Table 10 shows an example of TCI-State IE. The TCI-State IE is associated with a quasi co-location (QCL) type corresponding to one or two DL reference signals (RSs).

[Table 10]

```
-- ASN1START

-- TAG-TCI-STATE-START


TCI-State ::=                    SEQUENCE {
       tci-StateId                    TCI-StateId,
       qcl-Type1                      QCL-Info,
       qcl-Type2                      QCL-Info
                            OPTIONAL,    -- Need R

       ...

}


QCL-Info ::=                     SEQUENCE {
       cell                           ServCellIndex
                            OPTIONAL,    -- Need R
       bwp-Id                         BWP-Id
                                OPTIONAL, -- Cond CSI-RS-Indicated
       referenceSignal                CHOICE {
```

```
       csi-rs                          NZP-CSI-RS-ResourceId,
       ssb                             SSB-Index
       },
       qcl-Type                        ENUMERATED {typeA, typeB, typeC, typeD},
       ...
}


-- TAG-TCI-STATE-STOP

-- ASN1STOP
```

In Table 10, the parameter "bwp-id" indicates a BL BWP where a RS is located, and the parameter "cell" indicates a carrier where an RS is located, and the parameter "reference signal" indicates a reference antenna port(s) which is a quasi colocation source for a corresponding target antenna port(s). The target antenna port(s) may be an example of a CSI-RS, a PDCCH DMRS, or a PDSCH DMRS. For example, in order to indicate QCL reference information for a NZP CSI-RS, TCI state ID may be indicated in each CORESET configuration. In another example, in order to indicate QCL reference information for a PDSCH DMRS antenna port(s), DCI state ID may be indicated via DCI.

<QCL (Quasi-Co Location)>

An antenna port is defined such that a channel over which a symbol on one antenna port is carried can be inferred from another channel over which a symbol on another antenna port is carried. When properties of the channel over which a symbol on one antenna port is carried can be inferred from a channel over which a symbol on another antenna port is carried, the two antenna ports may be in a quasi co-located or quasi co-location (QC/QCL) relationship.

Herein, the channel properties may include at least one of delay spread, Doppler spread, Doppler shift, average gain, and average delay. Herein, the spatial Rx parameter indicates a spatial (reception) channel property parameter such as an angle of arrival.

In order to decode a PDSCH according to a PDCCH which is detected and has DCI intended for a corresponding UE and a given serving cell, a list of M number of TCI-state configurations in higher layer parameter PDSCH-Config may be set. The number M depends on UE capability.

Each TCI-State includes a parameter for setting a quasi co-location relationship between one or two DL reference signals and a DMRS port of the PDSCH.

The quasi co-location relationship may be configured as higher layer parameter qcl-Type 1 for the first DL RS and qcl-Type 2 (when set) for the second DL RS. If there are the two DL RSs, a QCL type is not the same, regardless of whether the two DL RSs have the same reference or different references.

A quasi co-location type corresponding to each DL RS is given by higher layer parameter "qcl-Type" in QCL-Info, and may take one of the following forms.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, in the case where a target antenna port is a specific NZP CSI-RS, corresponding NZP CSI-RS antenna ports may be indicated/configured to be QCL with a specific TRS in terms of QCL-Type A or with a specific SSB in terms of QCL-Type D. The UE indicated/configured as above may receive a corresponding NZP CSI-RS using a measured Doppler and a delay value, and may apply a Rx beam, which is used in receiving the QCL-TypeD SSB, to receive the corresponding NZP CSI-RS.

The UE receives an activation command used to map eight TCI states to codepoints of a DCI field "Transmission Configuration Indication".

<UL BM>

In the UL BM, beam reciprocity (or beam correspondence) between a Tx beam and an Rx beam may or may not be established according to terminal implementation. If reciprocity between a Tx beam and an Rx beam is established in both a base station and a terminal, a UL beam pair may be aligned through a DL beam pair. However, when reciprocity between a Tx beam and an Rx beam is not established in either of a base station and a terminal, a UL beam pair determination process is required separately from a DL beam pair determination.

In addition, even when both the base station and the UE maintain beam correspondence, the base station may use a UL BM procedure for DL Tx beam determination without the UE requesting reporting of a preferred beam.

UL BM may be performed through beamformed UL SRS transmission, and whether UL BM of an SRS resource set is applied is configured by (higher layer parameter) usage. When usage is configured to 'BeamManagement (BM)', only one SRS resource may be transmitted in each of a plurality of SRS resource sets at a given time instant.

A terminal may be configured with one or more Sounding Reference Symbol (SRS) resource sets configured by the (higher layer parameter) SRS-ResourceSet (through higher layer signaling, RRC signaling, etc.). For each SRS resource set, a UE may be configured with K≥1 SRS resources (higher layer parameter SRS-resource). Here, K is a natural number, and a maximum value of K is indicated by SRS_capability.

Like DL BM, a UL BM procedure may also be divided into Tx beam sweeping of a terminal and Rx beam sweeping of a base station.

FIG. 15 is a diagram illustrating an example of the UL BM procedure using an SRS. FIG. 15(a) shows an RX beam determination procedure by a base station, and FIG. 15(b) shows a Tx beam determination procedure by a UE.

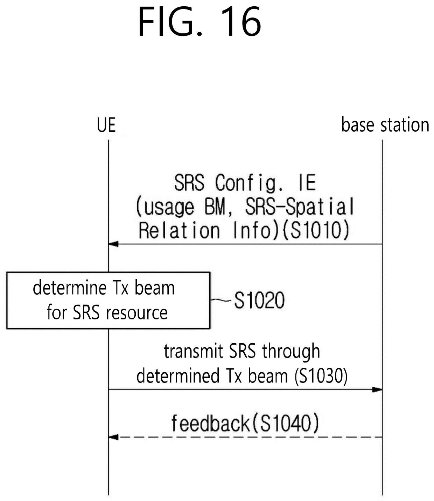

FIG. 16 is a flowchart illustrating a UL BM procedure using an SRS.

- A terminal receives RRC signaling (e.g., SRS-Config 1E) including a usage parameter (higher layer parameter) configured with 'beam management" from a base station (S1010).

Table 11 shows an example of an SRS-Config IE (Information Element), and the SRS-Config IE is used for SRS transmission configuration. The SRS-Config IE includes a list of SRS-Resources and a list of SRS-ResourceSets. Each SRS resource set means a set of SRS-resources.

A network may trigger transmission of an SRS resource set using configured aperiodicSRS-ResourceTrigger (L1 DCI).

[Table 11]

```
-- ASN1START
-- TAG-MAC-CELL-GROUP-CONFIG-START


SRS-Config ::=                          SEQUENCE {
        srs-ResourceSetToReleaseList            SEQUENCE (SIZE(1..maxNrofSRS-ResourceSets)) OF SRS-
ResourceSetId            OPTIONAL,    -- Need N
        srs-ResourceSetToAddModList                 SEQUENCE (SIZE(1..maxNrofSRS-ResourceSets)) OF
SRS-ResourceSet                OPTIONAL,    -- Need N


        srs-ResourceToReleaseList                 SEQUENCE (SIZE(1..maxNrofSRS-Resources)) OF
SRS-ResourceId                  OPTIONAL,    -- Need N
        srs-ResourceToAddModList                  SEQUENCE (SIZE(1..maxNrofSRS-Resources)) OF
SRS-Resource                  OPTIONAL,    -- Need N


        tpc-Accumulation                          ENUMERATED {disabled}
                                                  OPTIONAL,    -- Need S

        ...
}
```

```
SRS-ResourceSet ::=                    SEQUENCE {
    srs-ResourceSetId                      SRS-ResourceSetId,
    srs-ResourceIdList                     SEQUENCE (SIZE(1..maxNrofSRS-ResourcesPerSet))
OF SRS-ResourceId     OPTIONAL,    -- Cond Setup

    resourceType                           CHOICE {
        aperiodic                              SEQUENCE {
            aperiodicSRS-ResourceTrigger           INTEGER (1..maxNrofSRS-TriggerStates-1),
            csi-RS                                     NZP-CSI-RS-ResourceId
                            OPTIONAL,    -- Cond NonCodebook
            slotOffset                                 INTEGER (1..32)
                            OPTIONAL,    -- Need S
            ...
        },
        semi-persistent                        SEQUENCE {
            associatedCSI-RS                           NZP-CSI-RS-ResourceId
                        OPTIONAL, -- Cond NonCodebook
            ...
        },
        periodic                               SEQUENCE {
            associatedCSI-RS                           NZP-CSI-RS-ResourceId
                        OPTIONAL, -- Cond NonCodebook
            ...
        }
    },
    usage                                  ENUMERATED {beamManagement, codebook,
nonCodebook, antennaSwitching},
    alpha                                  Alpha
                            OPTIONAL, -- Need S
    p0                                     INTEGER (-202..24)
                            OPTIONAL, -- Cond Setup
    pathlossReferenceRS                    CHOICE {
        ssb-Index                              SSB-Index,
        csi-RS-Index                           NZP-CSI-RS-ResourceId


SRS-SpatialRelationInfo ::=        SEQUENCE {
    servingCellId                          ServCellIndex
    OPTIONAL,    -- Need S
    referenceSignal                        CHOICE {
        ssb-Index                              SSB-Index,
        csi-RS-Index                           NZP-CSI-RS-ResourceId,
        srs                                    SEQUENCE {
            resourceId                             SRS-ResourceId,
            uplinkBWP                              BWP-Id
```

```
                    }
                }
            }


    SRS-ResourceId ::=                         INTEGER (0..maxNrofSRS-Resources-1)
```

In Table 11, usage represents a higher layer parameter indicating whether an SRS resource set is used for beam management, codebook-based or non-codebook-based transmission. The usage parameter corresponds to an L1 parameter 'SRS-SetUse'. 'spatialRelationInfo' is a parameter indicating a configuration of a spatial relation between a reference RS and a target SRS. Here, a reference RS may be an SSB, a CSI-RS, or an SRS corresponding to the L1 parameter 'SRS-SpatialRelationInfo'. The usage configured for each SRS resource set.

- the terminal determines a Tx beam for an SRS resource to be transmitted based on the SRS-SpatialRelation Info included in the SRS-Config IE (S1020). Here, SRS-SpatialRelation Info is configured for each SRS resource, and indicates whether to apply the same beam as a beam used in an SSB, a CSI-RS, or an SRS for each SRS resource. In addition, SRS-SpatialRelationInfo may or may not be configured in each SRS resource.
- If the SRS-SpatialRelationInfo is configured in an SRS resource, the same beam as a beam used in an SSB, a CSI-RS or an SRS is applied and transmitted. However, if the SRS-SpatialRelationInfo is not configured in an SRS resource, the terminal arbitrarily determines a Tx beam and transmits an SRS through the determined Tx beam (S1030).

More specifically, for P-SRS in which 'SRS-ResourceConfigType' is configured to 'periodic':

i) When SRS-SpatialRelationInfo is configured with 'SB/PBCH', a UE transmits a corresponding SRS resource by applying the same spatial domain transmission filter (or generated from a corresponding filter) as a spatial domain reception (Rx) filter used for reception of an SSB/PBCH; or
ii) When SRS-SpatialRelationInfo is configured with 'CSI-RS', a UE transmits an SRS resource by applying the same spatial domain transmission filter used for reception of a periodic CSI-RS or an SP (semi-persistent) CSI-RS; or
iii) When SRS-SpatialRelationInfo is configured with 'SRS', a UE transmits a corresponding SRS resource by applying the same spatial domain transmission filter used for transmission of a periodic SRS.

Similar to the above, even when 'SRS-ResourceConfigType' is configured with 'SP (semi-persistent)-SRS' or 'AP (aperiodic)-SRS', beam determination and transmission operation may be applied.

- Additionally, a terminal may or may not receive feedback on an SRS from a base station as in the following three cases (S1040).

i) When Spatial Relation Info is configured for all SRS resources in an SRS resource set, a terminal transmits an SRS in a beam indicated by a base station. For example, when Spatial Relation Info all indicate the same an SSB, a CRI, or an SRI, a terminal repeatedly transmits an SRS in the same beam. This case corresponds to FIG. G(a), for the purpose of a base station selecting an Rx beam.
ii) Spatial Relation Info may not be configured for all SRS resources in an SRS resource set. In this case, a terminal may freely transmit while changing an SRS beam. That is, this case corresponds to FIG. G(b), for the purpose of a terminal sweeping a Tx beam.
iii) Spatial Relation Info may be configured only for some SRS resources in an SRS resource set. In this case, for the configured SRS resource, an SRS is transmitted with the indicated beam, and for the SRS resource for which Spatial Relation Info is not configured, a terminal may arbitrarily apply a Tx beam and transmit it.

<Downlink transmission and reception operation>

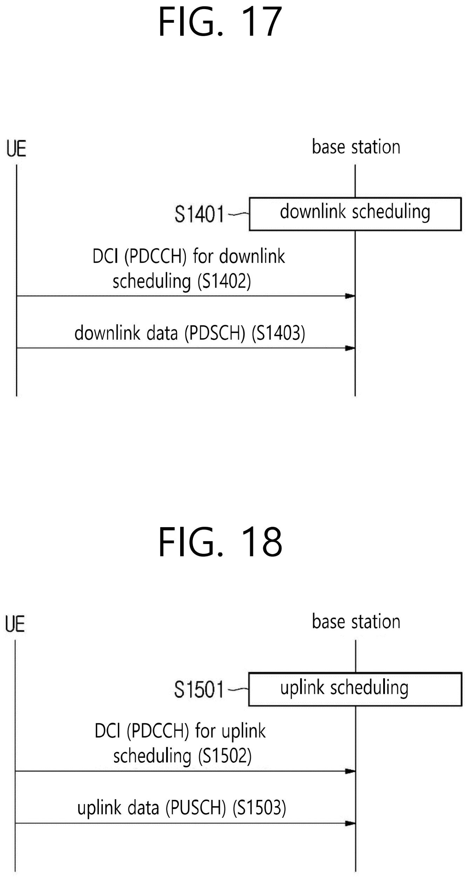

FIG. 17 illustrates an example of a downlink data transmission procedure that may be applied to the present disclosure.

Referring to FIG. 17, a base station schedules downlink transmission such as frequency/time resources, transmission layers, downlink precoder, and MCS (S1401). In particular, the base station may determine a beam for PDSCH transmission to a UE through the operations described above.

- The UE receives downlink control information (DCI) for downlink scheduling (i.e., including scheduling information of PDSCH) on a PDCCH from the base station (S1402).

For downlink scheduling, DCI format 1_0 or 1_1 may be used, and in particular, DCI format 1_1 includes the following information: Identifier for DCI formats, Bandwidth part indicator, Frequency domain resource assignment, Time domain resource assignment, PRB bundling size indicator, Rate matching indicator, ZP CSI-RS trigger, Antenna port(s), Transmission configuration indication (TCI), SRS request, and Demodulation Reference Signal (DMRS) sequence initialization.

In particular, according to each state indicated in an Antenna port(s) field, the number of DMRS ports may be scheduled, and Single-user (SU)/Multi-user (MU) transmission scheduling is also possible.

In addition, the TCI field is configured with 3 bits, and by indicating up to 8 TCI states according to a TCI field value, QCL for DMRS is dynamically indicated.

- The UE receives downlink data on a PDSCH from the base station (S1403).

When the UE detects a PDCCH including DCI format 1_0 or 1_1, the UE decodes the PDSCH according to an indication by the corresponding DCI.

Here, when the UE receives a PDSCH scheduled by DCI format 1, the DMRS configuration type may be configured by a higher layer parameter 'dmrs-Type', and the DMRS type is used to receive the PDSCH. In addition, the maximum number of front-loaded DMRS symbols for the PDSCH may be configured by a higher layer parameter 'maxLength'.

In the case of DMRS configuration type 1, when a single codeword is scheduled for the UE and an antenna port mapped with an index of {2, 9, 10, 11, or 30} is designated, or when two codewords are scheduled for the UE, the UE assumes that all remaining orthogonal antenna ports are not associated with PDSCH transmission to another UE.

Alternatively, in the case of DMRS configuration type 2, when a single codeword is scheduled for the UE and an antenna port mapped with an index of {2, 10, or 23} is designated, or when two codewords are scheduled for the UE, the UE assumes that all remaining orthogonal antenna ports are not associated with PDSCH transmission to another UE.

When the UE receives a PDSCH, a precoding granularity P' may be assumed to be consecutive resource blocks in a frequency domain. Here, P' may correspond to one of {2, 4, wideband}.

When P' is determined as wideband, the UE does not expect to be scheduled with non-contiguous PRBs, and the UE may assume that the same precoding is applied to the allocated resources.

On the other hand, when P' is determined as either {2, 4}, a Precoding Resource Block Group (PRG) is divided into P' consecutive PRBs. The number of actual consecutive PRBs in each PRG may be one or more. The UE may assume that the same precoding is applied to consecutive downlink PRBs within a PRG.

In order for the UE to determine a modulation order, a target code rate, and a transport block size in a PDSCH, the UE first reads a 5-bit MCS field in a DCI and determines the modulation order and the target code rate. Then, the UE reads a redundancy version field in the DCI and determines a redundancy version. Then, before rate matching, the UE determines the transport block size by using the number of layers and the total number of allocated PRBs.

<Uplink transmission and reception operation>

FIG. 18 illustrates an example of an uplink data transmission procedure that may be applied to the present disclosure.

Referring to FIG. 18, a base station schedules uplink transmission such as frequency/time resources, transmission layers, uplink precoder, and MCS (S1501). In particular, the base station may determine a beam for PUSCH transmission of a UE through the operations described above.

- The UE receives a DCI for uplink scheduling (i.e., including scheduling information of PUSCH) on a PDCCH from the base station (S1502).

For uplink scheduling, DCI format 0_0 or 0_1 may be used, and in particular, DCI format 0_1 includes the following information: Identifier for DCI formats, UL/Supplementary uplink (SUL) indicator, Bandwidth part indicator, Frequency domain resource assignment, Time domain resource assignment, Frequency hopping flag, Modulation and coding scheme (MCS), SRS resource indicator (SRI), Precoding information and number of layers, Antenna port(s), SRS request, DMRS sequence initialization, and Uplink Shared Channel (UL-SCH) indicator.

In particular, SRS resources configured within an SRS resource set related to a higher layer parameter 'usage' may be indicated by an SRS resource indicator field. In addition, for each SRS resource, 'spatialRelationInfo' may be configured, and its value may be one of {CRI, SSB, SRI}.

- The UE transmits uplink data on a PUSCH to the base station (S1503).

When the UE detects a PDCCH including DCI format 0_0 or 0_1, the UE transmits the corresponding PUSCH according to an indication by the corresponding DCI.

For PUSCH transmission, two transmission schemes of codebook-based transmission and non-codebook-based transmission are supported:

i) When a higher layer parameter 'txConfig' is configured as 'codebook', the UE is configured with codebook-based transmission. On the other hand, when the higher layer parameter 'txConfig' is configured as 'nonCodebook', the UE is configured with non-codebook-based transmission. When the higher layer parameter 'txConfig' is not configured, the UE does not expect to be scheduled by DCI format 0_1. When the PUSCH is scheduled by DCI format 0_0, the PUSCH transmission is based on a single antenna port.

In the case of codebook-based transmission, a PUSCH may be scheduled by DCI format 0_0, DCI format 0_1, or semi-statically. When this PUSCH is scheduled by DCI format 0_1, the UE determines a PUSCH transmission precoder based on SRI, Transmit Precoding Matrix Indicator (TPMI), and transmission rank from the DCI, as given by an SRS resource indicator field and a Precoding information and number of layers field. The TPMI is used to indicate a precoder to be applied across antenna ports, and when multiple SRS resources are configured, it corresponds to an SRS resource selected by an SRI. Alternatively, when a single SRS resource is configured, the TPMI is used to indicate a precoder to be applied across antenna ports, and it corresponds to the single SRS resource. A transmission precoder is selected from an uplink codebook having the same number of antenna ports as a higher layer parameter 'nrofSRS-Ports'. When the higher layer parameter 'txConfig' configured as 'codebook' is configured for the UE, at least one SRS resource is configured for the UE. An SRI indicated in slot n is associated with the most recent transmission of an SRS resource identified by the SRI, where the SRS resource precedes the PDCCH (i.e., slot n) carrying the SRI.

ii) In the case of non-codebook-based transmission, a PUSCH may be scheduled by DCI format 0_0, DCI format 0_1, or semi-statically. When multiple SRS resources are configured, the UE may determine a PUSCH precoder and a transmission rank based on a wideband SRI, where the SRI is given by an SRS resource indicator in a DCI or by a higher layer parameter 'srs-ResourceIndicator'. The UE uses one or multiple SRS resources for SRS transmission, where the number of SRS resources may be configured for simultaneous transmission within the same RB based on UE capability. For each SRS resource, only one SRS port is configured. Only a single SRS resource may be configured with a higher layer parameter 'usage' configured as 'nonCodebook'. The maximum number of SRS resources that may be configured for non-codebook-based uplink transmission is 4. An SRI indicated in slot n is associated with the most recent transmission of an SRS resource identified by the SRI, where the SRS transmission precedes the PDCCH (i.e., slot n) carrying the SRI.

<Multi-Transmission/Reception Point (TRP) related operation>

An M-TRP transmission scheme in which M TRPs transmit data to one User Equipment (UE) may be largely divided into eMBB M-TRP transmission, which is a scheme for increasing a transmission rate, and URLLC M-TRP transmission, which is a scheme for increasing a reception success rate and reducing latency.

<MTRP URLLC related description>

In the methods proposed in the present document, DL MTRP-URLLC means that multiple TRPs transmit the same data/DCI by using different layer/time/frequency resources. For example, TRP 1 transmits the same data/DCI on resource 1, and TRP 2 transmits the same data/DCI on resource 2. A UE configured with a DL MTRP-URLLC transmission scheme receives the same data/DCI by using different layer/time/frequency resources. In this case, the UE is indicated by the base station which QCL RS/type (i.e., DL TCI state) should be used in layer/time/frequency resources for receiving the same data/DCI. For example, when the same data/DCI is received on resource 1 and resource 2, the UE is indicated with a DL TCI state used on resource 1 and a DL TCI state used on resource 2. Since the UE receives the same data/DCI through resource 1 and resource 2, high reliability may be achieved. Such a DL MTRP URLLC may be applied to a PDSCH/PDCCH.

On the other hand, UL MTRP-URLLC means that multiple TRPs receive the same data/UCI from one UE by using different layer/time/frequency resources. For example, TRP 1 receives the same data/UCI from the UE on resource 1, and TRP 2 receives the same data/UCI from the UE on resource 2, and then the received data/UCI is shared through a connected backhaul link between TRPs. A UE configured with a UL MTRP-URLLC transmission scheme transmits the same data/UCI by using different layer/time/frequency resources. In this case, the UE is indicated by the base station which Tx beam and which Tx power (i.e., UL TCI state) should be used in layer/time/frequency resources for transmitting the same data/UCI. For example, when the same data/UCI is transmitted on resource 1 and resource 2, the UE is indicated with a UL TCI state used on resource 1 and a UL TCI state used on resource 2. Such a UL MTRP URLLC may be applied to a PUSCH/PUCCH.

<Description related to SDCI or MDCI based MTRP transmission>

In addition, from downlink control information (DCI) transmission perspective, a multiple TRP (M-TRP) transmission scheme may be divided into i) multiple DCI (M-DCI) based M-TRP transmission in which each TRP transmits a different DCI, and ii) single DCI (S-DCI) based M-TRP transmission in which one TRP transmits a DCI. As an example, in the case of S-DCI, since all scheduling information for data transmitted by M TRPs should be transferred through one DCI, it may be used in an ideal Backhaul (ideal BH) environment in which dynamic cooperation between two TRPs is possible.

<Description related to R16 NR MTRP transmission>

In the R16 NR standard, an S-DCI based MTRP PDSCH and an M-DCI based MTRP PDSCH transmission scheme are supported.

R16 S-DCI based MTRP PDSCH

In S-DCI based MTRP PDSCH transmission, one of SDM/FDM/TDM schemes may be used in a more detailed manner. In the case of SDM, one TB is transmitted in multi-layer, but layers belonging to different DMRS CDM groups are transmitted with different Tx beams (i.e., QCL RS or TCI state). As a result, compared with an existing STRP transmission scheme, the number of layers may be increased, and transmission capacity may be improved. In addition, when one TB is transmitted in multiple layers, some layers are transmitted to TRP 1 and the remaining layers are transmitted to TRP 2, thereby improving channel reliability due to diversity gain.

In the case of FDM, two schemes of scheme 2a and 2b are supported. Scheme 2a is a scheme in which one TB is transmitted in multi-RB, but RBs belonging to different RB groups are transmitted with different Tx beams (i.e., QCL RS or TCI state). Scheme 2b is a scheme in which the same TB is transmitted in different RB groups, but RBs belonging to different RB groups are transmitted with different Tx beams (i.e., QCL RS or TCI state). In the case of TDM, two schemes of scheme 3 and 4 are supported. Scheme 4 (= interslot TDM) is a scheme in which the same TB is repeatedly transmitted in multiple slots, but slots belonging to different slot groups are transmitted with different Tx beams (i.e., QCL RS or TCI state). On the contrary, scheme 3 (= intraslot TDM) is a scheme in which the same TB is repeatedly transmitted in multiple OFDM symbol groups, but some OFDM symbol groups and remaining OFDM symbol groups are transmitted with different Tx beams (i.e., QCL RS or TCI state).

R16 M-DCI based MTRP PDSCH

M-DCI based MTRP PDSCH transmission is a scheme in which each TRP schedules and transmits a PDSCH through a DCI. That is, TRP 1 transmits PDSCH 1 through DCI 1, and TRP 2 transmits PDSCH 2 through DCI 2. When PDSCH 1 and PDSCH 2 overlap in the same frequency-time resources, two PDSCHs are received for the same RE, thereby increasing resource efficiency and transmission capacity. For this, the R16 standard introduced a CORESET pool, which is a group of multiple CORESETs, and TRP 1 transmits a PDCCH through a CORESET belonging to CORESET pool 0, and TRP 1 also transmits a PDSCH scheduled by the corresponding PDCCH. TRP 2 transmits a PDCCH through a CORESET belonging to CORESET pool 1, and TRP 2 also transmits a PDSCH scheduled by the corresponding PDCCH. A PUSCH may also be scheduled for a UE by a specific TRP through a CORESET belonging to each CORESET pool. For a PUCCH, some PUCCH resources are scheduled by TRP 1 to receive UCI, and the remaining PUCCH resources are scheduled by TRP 2 to receive UCI. In the case of a PUSCH or PUCCH, channels scheduled/used by each TRP are TDM with each other, so that overlap does not occur and an increase in transmission capacity cannot be expected, but the UE may transmit independent PUSCH/PUCCH for TRP 1 and TRP 2, respectively.

In addition, the UE may recognize a PUSCH (or PUCCH) scheduled by a DCI received through different CORESETs (or CORESETs belonging to different CORESET groups) as a PUSCH (or PUCCH) transmitted to different TRPs, or may recognize it as a PUSCH (or PUCCH) of different TRPs. In addition, a scheme for UL transmission (e.g., PUSCH/PUCCH) transmitted to different TRPs may also be equally applied to UL transmission (e.g., PUSCH/PUCCH) transmitted to different panels belonging to the same TRP.

In the present disclosure, a CORESET group ID (or a CORESET pool index having the same meaning) described/mentioned may mean index/identification information (e.g., ID) for distinguishing CORESETs for each TRP/panel. And a CORESET group may be a group/union of CORESETs distinguished by index/identification information (e.g., ID)/the CORESET group ID for distinguishing CORESETs for each TRP/panel. As an example, a CORESET group ID may be specific index information defined in a CORESET configuration. As an example, a CORESET group may be configured/indicated/defined by an index defined in a CORESET configuration for each CORESET. And/or, a CORESET group ID may mean index/identification information/indicator for distinguishing/identifying between CORESETs configured/related to each TRP/panel, and a CORESET group ID described/mentioned in the present document may also be expressed by being replaced with a specific index/specific identification information/specific indicator for distinguishing/identifying between CORESETs configured/related to each TRP/panel. The CORESET group ID, that is, the specific index/specific identification information/specific indicator for distinguishing/identifying between CORESETs configured/related to each TRP/panel, may be configured/indicated through higher layer signaling (e.g., RRC signaling)/L2 signaling (e.g., MAC-CE)/L1 signaling (e.g., DCI). As an example, it may be configured/indicated so that PDCCH detection per TRP/panel is performed in units of the CORESET group, and/or it may be configured/indicated so that uplink control information (e.g., CSI, HARQ-A/N, SR) and/or uplink physical channel resources (e.g., PUCCH/PRACH/SRS resources) are separately managed/controlled per TRP/panel in units of the CORESET group, and/or HARQ A/N (process/retransmission) for PDSCH/PUSCH scheduled per TRP/panel in units of the CORESET group may be managed.

For example, a ControlResourceSet information element (IE), which is a higher layer parameter, is used to configure a time/frequency control resource set (CORESET). As an example, the control resource set (CORESET) may be related to detection and reception of downlink control information. The ControlResourceSet IE may include CORESET-related ID (e.g., controlResourceSetID)/an index of a CORESET pool for a CORESET (e.g., CORESETPoolIndex)/time/frequency resource configuration of a CORESET/TCI information related to a CORESET. As an example, an index of a CORESET pool (e.g., CORESETPoolIndex) may be configured as 0 or 1. In the above description, a CORESET group may correspond to a CORESET pool, and a CORESET group ID may correspond to a CORESET pool index (e.g., CORESETPoolIndex). A ControlResourceSet (i.e., CORESET) may be configured through higher layer signaling (e.g., RRC).

<Description related to R17 NR MTRP transmission>

In the R17 NR standard, MTRP PDCCH repetition transmission, MTRP PDCCH/PDSCH SFN transmission, S-DCI based MTRP PUSCH repetition transmission, and single PUCCH resource based MTRP PUCCH repetition transmission are supported. All of the corresponding transmission techniques are URLLC target enhancements for increasing reliability, and the same contents (i.e., DCI or UL TB or UCI) are repeatedly transmitted. In the case of MTRP PDCCH repetition transmission, it is repeatedly transmitted by TDM or FDM, MTRP PDCCH/PDSCH SFN is repeatedly transmitted in the same time/frequency/layer, and S-DCI based MTRP PUSCH repetition transmission is repeatedly transmitted by TDM, and single PUCCH resource based MTRP PUCCH repetition transmission is repeatedly transmitted by TDM.

R17 S-DCI based MTRP PDCCH repetition transmission

In the R17 NR standard, for MTRP PDCCH repetition transmission, multiple CORESETs configured with different TCI states (i.e., different QCL RSs) are configured for a UE, and multiple SS sets respectively connected with the corresponding CORESETs are configured. The base station indicates/configures to the UE that an SS set connected to one CORESET and an SS set connected to another CORESET are linked for repetition transmission, so that the UE may recognize that PDCCH candidates of the corresponding SS sets are repeatedly transmitted.

For example, two CORESETs, CORESET 0 and 1, are configured for a UE, CORESET 0 and 1 are respectively connected with SS set 0 and 1, and SS set 0 and 1 may be linked. The UE may recognize that a PDCCH candidate of SS set 0 and a PDCCH candidate of SS set 1 repeatedly transmitted the same DCI, and may recognize that a specific PDCCH candidate of SS set 0 and a specific PDCCH candidate of SS set 1 are a pair configured for repeatedly transmitting the same DCI through a specific rule. These two PDCCH candidates are called linked PDCCH candidates, and the UE may successfully decode the corresponding DCI if any one of the two PDCCH candidates is correctly received. However, when receiving a PDCCH candidate of SS set 0, the QCL RS (i.e., DL beam) of the TCI state of CORESET 0 connected with SS set 0 is used, and when receiving a PDCCH candidate of SS set 1, the QCL RS (i.e., DL beam) of the TCI state of CORESET 1 connected with SS set 1 is used, so that the linked PDCCH candidates are received with different beams.

R17 MTRP SFN PDCCH

As a special case of MTRP PDCCH repetition transmission, multiple TRPs may repeatedly transmit the same DCI through the same time/frequency/DMRS port, and this may be called SFN PDCCH transmission. However, for SFN PDCCH transmission, instead of configuring multiple CORESETs configured with different TCI states, the base station configures multiple TCI states in one CORESET. When the UE receives a PDCCH candidate through an SS set connected to the one CORESET, the UE performs channel estimation of a PDCCH DMRS and attempts decoding by using all of the multiple TCI states.

R17 MTRP SFN PDSCH

In the MTRP PDSCH repetition transmission described above, two TRPs repeatedly transmit the corresponding channel in different resources. However, as a special case, when the resources used by the two TRPs are the same, i.e., when the same channel is repeatedly transmitted through the same frequency, time, and layer (= DMRS port), reliability of the corresponding channel may also be improved. In this case, since the repeatedly transmitted same channel is not distinguished in resources and is combined in the air and received, it is recognized as one channel from the perspective of the receiving end. In the R17 NR standard, two DL TCI states may be configured for receiving PDSCH DMRS for PDSCH SFN transmission.

R17 S-DCI based MTRP PUSCH repetition transmission

In the R17 NR standard, for S-DCI based MTRP PUSCH transmission, the base station configures two SRS sets for a UE, and each set is used for indicating UL Tx port, UL beam/QCL information toward TRP 1 and TRP 2, respectively. In addition, the base station performs SRS resource indication per SRS set through two SRI fields in one DCI and may indicate up to two PC parameter sets. For example, a first SRI field may indicate an SRS resource and a PC parameter set defined in set 0, and a second SRI field may indicate an SRS resource and a PC parameter set defined in set 1. The UE is indicated with UL Tx port, PC parameter set, and UL beam/QCL information toward TRP 1 through the first SRI field, and performs PUSCH transmission in a TO corresponding to set 0 through this. Similarly, the UE is indicated with UL Tx port, PC parameter set, and UL beam/QCL information toward TRP 2 through the second SRI field, and performs PUSCH transmission in a TO corresponding to set 1 through this. Fields such as TPMI, PTRS, and TPC, in addition to the SRI field, are also extended from one existing field to two fields so that they may be indicated per TRP. In addition, a 2-bit SRS resource set indication field is introduced so that STRP PUSCH repetition transmission may be performed by selecting a specific one of two SRS sets, and MTRP PUSCH repetition transmission may be performed by selecting both. That is, when the field is 00 or 01, each indicates SRS set 0 and SRS set 1, respectively, and an STRP PUSCH transmission corresponding to each set is performed, and when the field is 10, (SRS set 0, SRS set 1) are indicated, and an MTRP PUSCH transmission is performed in the order of the indicated set pair. That is, set 0 corresponds to the first PUSCH TO. When the field is 11, (SRS set 1, SRS set 0) are indicated, and an MTRP PUSCH transmission is performed in the order of the indicated set pair. That is, set 1 corresponds to the first PUSCH TO.

R17 single PUCCH resource based MTRP PUCCH repetition transmission

In the R17 NR standard, for single PUCCH resource based MTRP PUCCH transmission, the base station activates/configures two spatial relation info in a single PUCCH resource for a UE (in the case of FR1, activates/configures two power control (PC) parameter sets), and when the UE transmit UL UCI through the corresponding PUCCH resource, each spatial relation info is used for indicating spatial relation info toward TRP 1 and TRP 2, respectively. For example, through a value indicated in first spatial relation info, the UE is indicated with Tx beam/PC parameters toward TRP 1 and performs PUCCH transmission in a TO corresponding to TRP 1 by using this information. Similarly, through a value indicated in second spatial relation info, the UE is indicated with Tx beam/PC parameters toward TRP 2 and performs PUCCH transmission in a TO corresponding to TRP 2 by using this information.

In the Rel-17 standardization meeting, in order for MTRP PUCCH repetition transmission, a configuration method was enhanced so that two spatial relation info may be configured in a PUCCH resource. That is, when power control (PC) parameters such as PLRS, Alpha, P0, and Closed loop index are configured in each spatial relation info, a spatial relation RS may be configured. As a result, through two spatial relation info, PC information and spatial relation RS information corresponding to two TRPs may be configured, and the UE transmits through a PUCCH by using the first spatial relation info in TO 1, and transmits the same UCI (i.e., CSI, ACK/NACK, SR) through a PUCCH by using the second spatial relation info in TO 2. Hereinafter, a PUCCH resource configured with two spatial relation info is referred to as an MTRP PUCCH resource, and a PUCCH resource configured with one spatial relation info is referred to as an STRP PUCCH resource.

<Meaning of TCI state/beam indication>

In addition, in the methods proposed in the present document, a meaning that a specific TCI state (or TCI) is used (or mapped) for receiving data/DCI/UCI in certain frequency/time/space resources may mean that, in the case of DL, channel is estimated from a DMRS by using a QCL type and a QCL RS indicated by the corresponding DL TCI state in the frequency/time/space resources, and data/DCI is received/demodulated with the estimated channel. In the case of UL, it may mean that DMRS and data/UCI are transmitted/modulated by using a Tx beam and/or Tx power indicated by the corresponding UL TCI state in the frequency/time/space resources.

The UL TCI state includes Tx beam or Tx power information of a UE, and instead of a TCI state, another parameter such as spatial relation info may also be configured for the UE. The UL TCI state may be directly indicated in an UL grant DCI, or may mean spatial relation info of an SRS resource indicated through an SRI field of an UL grant DCI. Alternatively, it may mean OL Tx power control parameters (j: index for open loop parameters Po & alpha (maximum 32 parameter value sets per cell), q_d: index of DL RS resource for PL measurement (maximum 4 measurements per cell), 1: closed loop power control process index (maximum 2 processes per cell)) connected with a value indicated through an SRI field of an UL grant DCI. Alternatively, in R17 NR, UL TCI may be indicated by using a DL grant DCI.

<Other extensions and description>

In the present disclosure, for convenience of explanation, the proposed scheme is applied by assuming cooperative transmission/reception between 2 TRPs, but it may also be extended and applied to a multi-TRP environment of 3 or more and may also be extended and applied to a multi-panel environment. Different TRPs may be recognized by the UE as different TCI states, and that the UE receives/transmits data/DCI/UCI by using TCI state 1 may mean that the UE receives/transmits data/DCI/UCI from/to TRP 1.

In the present disclosure, TO means each channel transmitted at different times when multiple channels are TDM, means each channel transmitted in different frequencies/RBs when multiple channels are FDM, and means each channel transmitted in different layers/beams/DMRS ports when multiple channels are SDM. One TCI state is mapped to each TO. When the same channel is repeatedly transmitted, one complete DCI/data/UCI is transmitted in one TO, and a receiving side increases reception success rate by receiving multiple TOs.

Specific embodiments of the present disclosure

The present disclosure relates to a technology for scheduling a plurality of serving cells by using one downlink control information (DCI) in a wireless communication system. In particular, the present disclosure relates to configuration and interpretation of fields included in a DCI for scheduling a plurality of serving cells, and proposes embodiments for minimizing conflicts with other configurations and embodiments for interpreting a DCI in a situation in which contradictions with other configurations occur.

For the purpose of reducing DCI overhead required for PDSCH/PUSCH scheduling in a CA situation in which a plurality of cells are configured, a multi-cell scheduling scheme of simultaneously scheduling PDSCH/PUSCH transmission through a plurality of serving cells/CCs by a single DCI may be considered. Hereinafter, [Table 12] is a part of a work item description (WID) related to multi-cell scheduling.

[Table 12]

| |
|---|
| NR supports a wide range of spectrum in different frequency ranges. It is expected that there will be increasing availability of spectrum in the market for 5G Advanced possibly due to re-farming from the bands originally used for previous cellular generation networks. Especially for low frequency FR1 bands, the available spectrum blocks tend to be more fragmented and scattered with narrower bandwidth. For FR2 bands and some FR1 bands, the available spectrum can be wider such that intra-band multi-carrier operation is necessary. To meet different spectrum needs, it is important to ensure that these scattered |
| spectrum bands or wider bandwidth spectrum can be utilized in a more spectral/power efficient and flexible manner, thus providing higher throughput and decent coverage in the network. |

(continued)

One motivation is to increase flexibility and spectral/power efficiency on scheduling data over multiple cells including intra-band cells and inter-band cells. The current scheduling mechanism only allows scheduling of single cell PUSCH/PDSCH per a scheduling DCI. With more available scattered spectrum bands or wider bandwidth spectrum, the need of simultaneous scheduling of multiple cells is expected to be increasing. To reduce the control overhead, it is beneficial to extend from single-cell scheduling to multi-cell PUSCH/PDSCH scheduling with a single scheduling DCI. Meanwhile, trade-off between overhead saving and scheduling restriction has to be taken into account.

For this, as one of the 3GPP NR Release-18 work items (WIs), an item called multi-carrier enhancement has been approved, and one of the contents to be dealt with in the corresponding item is as shown in [Table 13] below.

[Table 13]

1. Specify a solution for multi-cell PUSCH/PDSCH scheduling (one PDSCH/PUSCH per cell) with a single DCI [RAN1]
·Identify the maximum number of cells that can be scheduled simultaneously
·Consider both intra-band and inter-band CA operation
·Consider both FR1 and FR2
·The single DCI shall be optimized for 3 or more cells for the multi-cell PUSCH/PDSCH scheduling

That is, Release-18 has, as one of its objectives, concretizing a scheme of scheduling PUSCH and/or PDSCH on a plurality of serving cells by using one DCI. Therefore, the present disclosure proposes a technology for DCI field design in scheduling PUSCH and/or PDSCH on a plurality of serving cells through one DCI. Specifically, the present disclosure proposes various embodiments on structures and utilization of DCI fields related to MIMO.

For convenience of explanation hereinafter, in the present disclosure, one DCI for simultaneously scheduling PUSCH and/or PDSCH on one or a plurality of serving cells is referred to as an 'm-CC (multiple-CC) DCI', and one DCI for scheduling PUSCH and/or PDSCH on a single serving cell is referred to as an 's-CC (single-CC) DCI'. The m-CC DCI may be distinguished from the s-CC DCI by a different DCI format, by an RNTI, or by an indicator field in a DCI. In addition, PUSCH and/or PDSCH for different numbers/combinations of serving cells may be scheduled through one m-CC DCI. For example, through an m-CC DCI, only serving cell #1 may be scheduled, serving cell #1 and serving cell #2 may be scheduled, and serving cell #1, serving cell #2, and serving cell #3 may be scheduled. The number/combination of scheduled cells may be indicated by a specific field in a DCI, by an RNTI, etc. In addition, in the present disclosure, when only PUSCH and/or PDSCH on one cell is scheduled through an m-CC DCI, it is referred to as an 's-CC scheduling case', and when PUSCH and/or PDSCH on a plurality of cells is scheduled, it may be referred to as an 'm-CC scheduling case'.

For one UE, channel conditions may be different for each cell. Accordingly, the number of layers for MIMO transmission to be applied to each PDSCH or PUSCH may be different. If flexibility according to channel conditions is to be maximally guaranteed, the m-CC DCI payload size would greatly increase. In particular, as in the objective of [Table 13], in order to simultaneously schedule three or more cells, a compact DCI field design is needed. Therefore, the present disclosure proposes various embodiments of configuring an m-CC DCI with respect to a transmission configuration indication (TCI) field related to MIMO operation. Through this, the DCI payload size may be reduced.

That is, the present disclosure proposes a configuration and interpretation method of each field in a DCI for design of a DCI (e.g., multi-cell DCI) structure for multi-cell scheduling. In the present disclosure, embodiments described mainly for multi-cell scheduling operation for PDSCH or PUSCH transmission may also be equally or similarly applied to multi-cell scheduling for PUSCH or PDSCH transmission. In addition, in the present disclosure, a cell may be understood to include a BWP configured/indicated for the corresponding cell and an active BWP.

Meanwhile, in the present disclosure, within a combination of cells co-scheduled simultaneously through the same multi-cell DCI (e.g., a co-scheduled cell set) or within each cell subgroup described later, selection of a reference cell is needed. According to various embodiments, the reference cell may be determined based on at least one of various criteria described later. For example, a cell having the lowest or the highest cell index may be determined as a reference cell. In another example, a cell whose indicated PDSCH/PUSCH transmission starting symbol timing is the earliest or the latest may be determined as a reference cell. In this case, when there are multiple cells whose PDSCH/PUSCH starting symbol timing is the earliest or the latest, a cell having the lowest or the highest cell index among the multiple cells may be determined as a reference cell. In another example, a cell whose indicated PDSCH/PUSCH transmission ending symbol timing is the earliest or the latest may be determined as a reference cell. In this case, when there are multiple cells whose PDSCH/PUSCH ending symbol timing is the earliest or the latest, a cell having the lowest or the highest cell index among the multiple cells may be determined as a reference cell. In another example, a cell indicated by a CIF field value or a cell designated in advance through RRC may be determined as a reference cell. In another example, among all cell sets schedulable through arbitrary multi-cell DCI (e.g., a schedulable cell set), a cell having the lowest or the highest cell index, a cell indicated by a CIF field value, a cell in which the multi-cell DCI is transmitted, or a cell designated in advance through RRC may be determined as a reference cell.

Meanwhile, in the present disclosure, in the case of fields applied to a shared-reference-cell scheme, a shared-cell-common scheme, and a shared-state-extension scheme, only one field commonly applied to all cells belonging to a co-scheduled cell set may be included in a multi-cell DCI. Alternatively, in a state in which all cells belonging to a co-scheduled cell set are configured to be grouped into one or a plurality of cell subgroups, one field commonly applied to each cell subgroup may be included, that is, an individual/independent field per cell subgroup may be configured.

Alternatively, in a state in which all cells belonging to a schedulable cell set are configured to be grouped into one or a plurality of cell subgroups, one field commonly applied to each cell subgroup may be included, that is, an individual/independent field per cell subgroup may be configured. In this case, for each cell subgroup, a shared-reference-cell scheme/shared-cell-common scheme/shared-state-extension scheme and a field/information configuration/indication method based thereon may be applied. Here, each cell subgroup may be configured/set with a specific one cell or specific multiple cells (e.g., some or all of the cells belonging to a co-scheduled cell set or a schedulable cell set).

Meanwhile, a DCI field to which a shared-cell-common scheme is applied may indicate scheduling information based on tables configured per cell. Specifically, when a table defining state(s)/index(es) corresponding to combination(s) of different parameter(s)/value(s) per cell is pre-configured by RRC or MAC-CE for single-cell DCI-based scheduling, the table may be utilized for the shared-cell-common scheme proposed in the present disclosure. That is, a DCI field to which a shared-cell-common scheme is applied may be used in a manner of indicating one of a plurality of states/indexes in the corresponding table. For example, for fields such as a PRB bundling size indicator, a rate matching indicator, a ZP CSI-RS trigger, and/or an SRS request, a specific state/index indicated through a DCI field commonly configured for a cell set (e.g., a set of cells scheduled together or a cell subgroup) to which a shared-cell-common scheme is applied may be interpreted/applied according to one of the following options. In case of option #X, the state/index configured in the DCI field may be interpreted/applied as a combination of parameters/values corresponding to the state/index in a table configured for each cell belonging to the cell set. That is, in case of option #X, a separate table may be applied per cell. In case of option #Y, the state/index configured in the DCI field may be interpreted/applied as a combination of parameters/values corresponding to the state/index in a table configured for a reference cell within the cell set. That is, in case of option #Y, one table may be commonly applied to the cells belonging to the cell set. In case of option #Z, a separate common table commonly applied to the cell set may be configured in advance through RRC/MAC-CE, and the state/index configured in the DCI field may be interpreted/applied as a combination of parameters/values corresponding to the state/index in the common table. That is, in case of option #Z, a separate table commonly applied to the cells belonging to the cell set may be used.

As described above, when scheduling a plurality of cells through multi-cell DCI, an appropriate design and interpretation for fields within the DCI is required. Accordingly, the present disclosure proposes various embodiments that may more effectively transfer and/or interpret information for some fields included in the DCI.

[Example #1] Indication of TCI state

Among the various fields that may be included in DCI, the TCI field is defined as shown in [Table 14] below.

[Table 14]

| |
|---|
| - Transmission configuration indication ? 0 bit if higher layer parameter tci-PresentInDCI is not enabled; otherwise 3 bits as defined in Clause 5.1.5 of [6, TS38.214].<br>    If "Bandwidth part indicator" field indicates a bandwidth part other than the active bandwidth part,<br>    - if the higher layer parameter tci-PresentInDCI is not enabled for the CORESET used for the PDCCH carrying the DCI format 1_1,<br>       - the UE assumes tci-PresentInDCI is not enabled for all CORESETs in the indicated bandwidth part;<br>    - otherwise,<br>       - the UE assumes tci-PresentInDCI is enabled for all CORESETs in the indicated bandwidth part. |

According to a cell-specific configuration, an indication for a TCI state may be configured according to one of the following two modes.

- TCI mode #1: Through higher layer signaling such as RRC signaling, TCI may be individually configured per cell or per BWP. Here, in the case of uplink, instead of TCI, an RS for spatial relation and/or an RS for path-loss configuration may be configured.

- TCI mode #2: Through higher layer signaling such as RRC signaling, a list of cells (e.g., CC#1/2) sharing TCI may be configured, and when the TCI state for one cell (e.g., CC#1) among the cells in the list is changed, the TCI states of other cells (e.g., CC#2) included in the list may also be commonly changed. Here, in the case of uplink, instead of TCI, an RS for spatial relation and/or an RS for path-loss configuration may be configured.

For the TCI field in s-CC DCI, 3 bits may be allocated, and a mapping relation of code point to TCI state index(es) may be updated through a MAC CE. In addition, the TCI field in m-CC DCI may be configured by using a code point extension scheme based on a single field, that is, so that TCI states corresponding to each code point of the TCI field in the m-CC DCI are configured/indicated separately from a case scheduled by the s-CC DCI. In this case, values corresponding to each code point of the TCI field in the m-CC DCI may be code points of the TCI field in the s-CC DCI. For example, when the m-CC DCI capable of scheduling four CCs such as CC#1/2/3/4 is used, TCI state indexes per code point of the TCI field configured for each CC may be configured/indicated as shown in [Table 15] below. [Table 15] shows an example of linked TCI state indexes per code point on the TCI field of the s-CC DCI.

[Table 15]

| Code-point of TCI field for s-CC DCI | CC#1 | CC#2 | CC#3 | CC#4 |
|---|---|---|---|---|
| 000 | 1 | 2 | 1 | 2 |
| 001 | 2 | 5 | 9 | 6 |
| 010 | 3 | 7 | 10 | 7 |
| 011 | - | 8 | 11 | 9 |
| 100 | - | - | 12 | 10 |
| 101 | - | - | - | 11 |
| 110 | - | - | - | 14 |
| 111 | - | - | - | 15 |

As shown in [Table 15], the code point '000' is mapped to indicate TCI state index #1 for CC#1, TCI state index #2 for CC#2, TCI state index #1 for CC#3, and TCI state index #2 for CC#4. For convenience of description hereinafter, the present disclosure may refer to a code point mapped to at least one TCI state for single-cell scheduling as a 'first type code point', a 'code point for single-cell scheduling', or a term having an equivalent technical meaning, as shown in [Table 15].

Meanwhile, linked reference values per code point of the TCI field in the m-CC DCI may be configured as shown in [Table 16] below. [Table 16] shows an example of linked reference values per code point of the TCI field in the m-CC DCI.

[Table 16]

| Code-point of TCI field for m-CC DCI | Associated code-point for CC#1 | Associated code-point for CC#2 | Associated code-point for CC#3 | Associated code-point for CC#4 |
|---|---|---|---|---|
| 00 | 000 | 000 | 100 | 110 |
| 01 | 010 | 011 | 000 | 111 |
| 10 | 001 | 011 | 011 | 000 |
| 11 | 010 | 010 | 010 | 001 |

According to [Table 16], when the state indicated through the TCI field in the m-CC DCI is '00', TCI state #1 linked to state '000' of the TCI field in the s-CC DCI scheduling CC#1 is applied for CC#1, TCI state #2 linked to state '000' of the TCI field in the s-CC DCI scheduling CC#2 is applied for CC#2, TCI state #12 linked to state '100' of the TCI field in the s-CC DCI scheduling CC#3 is applied for CC#3, and TCI state #14 linked to state '110' of the TCI field in the s-CC DCI scheduling CC#4 is applied for CC#4. For convenience of description hereinafter, the present disclosure may refer to a code point for multi-cell scheduling mapped to a combination of code points configured for single-cell scheduling, as shown in [Table 16], as a 'second type code point', a 'code point for multi-cell scheduling', or a term having an equivalent technical meaning.

[Example #1-1] Interpretation scheme of code points in the TCI field of m-CC DCI according to a change (e.g., addition or deletion) of TCI state index values linked to the TCI field of each s-CC

When TCI state index values linked to the TCI field of each s-CC are changed through a MAC CE, a mismatch with code points of the TCI field in the m-CC may occur. For example, as shown in [Table 17], TCI state index values linked to the TCI field for CC#1 may be changed through a MAC CE. [Table 17] shows an example of a result in which TCI state index values linked to the TCI field for CC#1 are added through a MAC CE compared to [Table 15].

[Table 17]

| Code-point of TCI field for s-CC DCI | CC#1 | CC#2 | CC#3 | CC#4 |
|---|---|---|---|---|
| 000 | 1 | 2 | 1 | 2 |
| 001 | 2 | 5 | 9 | 6 |
| 010 | 3 | 7 | 10 | 7 |
| 011 | 4 | 8 | 11 | 9 |
| 100 | - | - | 12 | 10 |
| 101 | - | - | - | 11 |
| 110 | - | - | - | 14 |
| 111 | - | - | - | 15 |

As shown in [Table 17], when a TCI state index corresponding to code point '011' is added, a problem may occur in that the code point '011' of the TCI field for the corresponding s-CC DCI cannot be utilized for scheduling through the TCI field in the m-CC DCI. In this way, when a TCI state index is added by a MAC CE for updating the TCI state field for a specific CC, the added TCI state index may not be utilized for scheduling through the m-CC DCI. For example, in the case of [Table 17], only one of TCI state indexes 1, 2, or 3 for CC#1 before the addition may be indicated through the m-CC DCI. In order for the added TCI state index to be utilized for scheduling through the m-CC DCI, an RRC reconfiguration is required. Through the RRC reconfiguration, reference values per TCI field in the m-CC DCI may be updated as in the example of [Table 18]. [Table 18] shows an example of a result in which the newly added code point '011' for CC#1 is updated compared to [Table 16].

[Table 18]

| Code-point of TCI field for m-CC DCI | Associated code-point for CC#1 | Associated code-point for CC#2 | Associated code-point for CC#3 | Associated code-point for CC#4 |
|---|---|---|---|---|
| 00 | 000 | 000 | 100 | 110 |
| 01 | 010 | 011 | 000 | 111 |
| 10 | 001 | 011 | 011 | 000 |
| 11 | 011 | 010 | 010 | 001 |

As another example, as shown in [Table 19], TCI state index values linked to the TCI field for CC#1 may be changed through a MAC CE. [Table 19] shows an example in which TCI state index values linked to the TCI field for CC#1 are deleted through a MAC CE compared to [Table 15].

[Table 19]

| Code-point of TCI field for s-CC DCI | CC#1 | CC#2 | CC#3 | CC#4 |
|---|---|---|---|---|
| 000 | 1 | 2 | 1 | 2 |
| 001 | 2 | 5 | 9 | 6 |
| 010 | - | 7 | 10 | 7 |
| 011 | - | 8 | 11 | 9 |
| 100 | - | - | 12 | 10 |
| 101 | - | - | - | 11 |
| 110 | - | - | - | 14 |
| 111 | - | - | - | 15 |

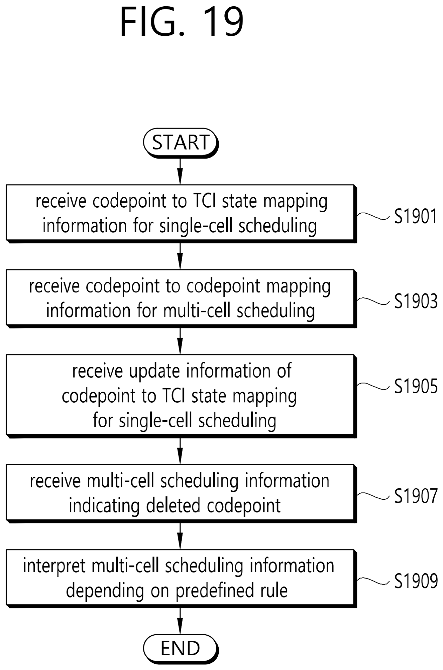

As shown in [Table 19], when a TCI state index corresponding to code point '010' is deleted, if the code point '010' of the TCI field for the corresponding s-CC is indicated through the TCI field in the m-CC DCI, a problem in interpretation at the UE may occur. In other words, although a TCI state index corresponding to a certain code point is deleted by a MAC CE for updating the TCI state field of a specific CC, if a state (e.g., state '01' or '11' in the example of [Table 16]) referencing the code point linked to the deleted TCI state index is indicated through the m-CC DCI, a situation of indicating the deleted TCI state occurs, and thus a solution for this is required. In this case, the UE may interpret the corresponding TCI field according to one of the embodiments described below. FIG. 19 illustrates an example of a procedure for processing multi-cell scheduling information indicating a deleted code point according to an embodiment of the present disclosure. FIG. 19 exemplifies a method performed by the UE.

Referring to FIG. 19, in step S1901, the UE receives information related to a mapping of code points to TCI states for single-cell scheduling. For example, the UE may receive a MAC CE indicating a mapping relation between a first type code point, that is, a code point for single-cell scheduling, and a TCI state ID. The MAC CE includes bits corresponding to a plurality of TCI state IDs, and may indicate activation of a TCI state corresponding to the bit based on values of the bits. For this, although not illustrated in FIG. 19, the UE may receive configuration information indicating a TCI state ID and a related RS as information for configuring at least one TCI state. In this case, the configuration information for configuring at least one TCI state may configure one TCI state or a plurality of TCI states (e.g., a first TCI state and a second TCI state) for one cell.

In step S1903, the UE receives information related to a mapping of code points to code points for multi-cell scheduling. For example, the UE may receive information indicating a mapping relation between a code point for multi-cell scheduling and a list of code points for single-cell scheduling of scheduled cells. In other words, the UE may receive configuration information indicating a mapping relation between at least one second type code point and a combination of at least one first type code point. For example, the information related to a mapping of code points to code points may be received through RRC signaling.

In step S1905, the UE receives information for updating a mapping of code points to TCI states for single-cell scheduling. For example, the UE receives a MAC CE indicating a mapping relation between a code point for single-cell scheduling and a TCI state ID, and the information received in this step may be different from the information received in step S1901. Accordingly, the UE may determine at least one of deletion (e.g., deactivation) of a code point, addition (e.g., activation) of a code point, and replacement of a TCI state ID corresponding to a code point. In this embodiment, a situation in which at least one code point is deactivated is assumed.

In step S1907, the UE receives multi-cell scheduling information indicating a deleted code point. The multi-cell scheduling information includes a code point for multi-cell scheduling corresponding to a set of code points indicating TCI states of scheduled cells. In this case, one of the code points for single-cell scheduling included in the set of code points may be in a deactivated, that is, deleted state in step S1905.

In step S1909, the UE interprets the multi-cell scheduling information according to a predefined rule. That is, since the second type code point indicating TCI states per cell in the multi-cell scheduling information is indicating a deleted code point, a separate rule is required for interpretation of the corresponding code point. In this case, the rule may be predefined or may be configured by the base station. For example, the rule may be defined to cause validity determination of scheduling information, replacement code point for the deleted code point, or determination of a TCI state. For example, the UE may treat at least a part of the scheduling information as invalid, may interpret it as another code point instead of the deleted code point, or may interpret it as another TCI state instead of the TCI state indicated by the deleted code point.

As described above with reference to FIG. 19, when a deleted code point is indicated by multi-cell scheduling information, the UE may interpret the scheduling information according to a predefined rule and may perform communication. In this case, various embodiments for the predefined rule are as follows.

[Example #1-1-1] The UE may consider a state as invalid for all CCs scheduled by the m-CC DCI. That is, when the state is indicated, the UE may treat it as an inconsistent DCI or may ignore the corresponding DCI. In other words, in the case of [Example #1-1-1], the UE may determine scheduling information included in the m-CC DCI as invalid and may discard the scheduling information. Accordingly, the UE may determine resources indicated by the received m-CC DCI as unavailable and may not perform communication. For example, in the case of downlink, the UE may not attempt decoding. In the case of uplink, the UE may not transmit a signal.

[Example #1-1-2] The UE may consider only the CC (e.g., CC#1 in the example of [Table 16]) corresponding to the TCI state index among the CC(s) scheduled by the m-CC DCI as invalid. That is, the UE may determine that scheduling is not indicated for the corresponding CC. In other words, in the case of [Example #1-1-2], the UE may determine part of the scheduling information included in the m-CC DCI, that is, scheduling information for the CC corresponding to the deleted code point, as invalid. Accordingly, the UE may determine resources related to the corresponding CC among the resources indicated by the received m-CC DCI as unavailable and may not perform communication with the corresponding CC. For example, in the case of downlink, the UE may not attempt decoding. In the case of uplink, the UE may not transmit a signal.

[Example #1-1-3] The UE may consider that a default TCI state index is applied to the CC (e.g., CC#1 in the example of [Table 16]) corresponding to the TCI state index among the CC(s) scheduled by the m-CC DCI. In this case, the default TCI state index may be separately configured in advance by the base station, may be defined as a TCI state index corresponding to the lowest code point of the TCI field in the s-CC for the corresponding CC, may be defined as a TCI state index corresponding to the lowest code point linked to a single TCI state index, or may be defined as a TCI state linked to the lowest CORESET index among at least one most recent TCI state applied for monitoring the s-CC DCI for the corresponding CC. In other words, in the case of [Example #1-1-3], the UE may determine a default TCI state to be applied to the CC corresponding to the deleted code point and may perform communication with the corresponding CC using the default TCI state. In this case, the UE may also perform communication with other CCs scheduled together.

[Example #1-2] A scheme of updating CC-specific reference values of each code point of the TCI field in the m-CC DCI through a MAC CE.

An update for the TCI field in the s-CC DCI may be possible through a MAC CE, but an update for the TCI field in the m-CC DCI may be possible only through RRC signaling. In this case, a problem of mismatch as in Example #1-1 described above may occur. Therefore, in order to minimize the problem considered in Example #1-1, it may be advantageous to allow an update for the TCI field in the m-CC DCI to be performed through a MAC CE. For example, CC-specific reference values of each code point of the TCI field in the m-CC DCI as shown in [Table 16] may be updated through a MAC CE. Through the MAC CE, reference values for all code points of the TCI field may be updated, and reference values for a specific code point in the TCI field may be updated through one MAC CE.

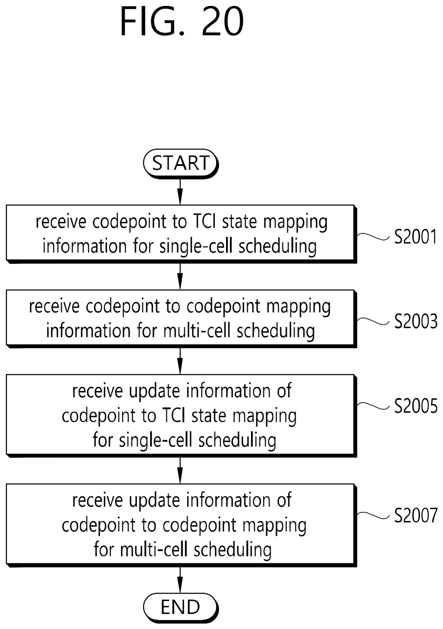

FIG. 20 illustrates an example of a procedure for updating code point mapping information for multi-cell scheduling according to an embodiment of the present disclosure. FIG. 20 exemplifies a method performed by the UE.

Referring to FIG. 20, in step S2001, the UE receives information related to a mapping of code points to TCI states for single-cell scheduling. For example, the UE may receive a MAC CE indicating a mapping relation between a code point for single-cell scheduling and a TCI state ID. The MAC CE includes bits corresponding to a plurality of TCI state IDs, and may determine whether the TCI state corresponding to the bit is activated based on values of the bits. For this, although not illustrated in FIG. 20, the UE may receive configuration information indicating a TCI state ID and a related RS as information for configuring at least one TCI state.

In step S2003, the UE receives information related to a mapping of code points to code points for multi-cell scheduling. For example, the UE may receive information indicating a mapping relation between a code point for multi-cell scheduling and a list of code points for single-cell scheduling of scheduled cells. For example, the information related to a mapping of code points to code points may be received through RRC signaling.

In step S2005, the UE receives information for updating a mapping of code points to TCI states for single-cell scheduling. For example, the UE receives a MAC CE indicating a mapping relation between a code point for single-cell scheduling and a TCI state ID, and the information received in this step may be different from the information received in step S2001. Accordingly, the UE may determine at least one of deletion (e.g., deactivation) of a code point, addition (e.g., activation) of a code point, and replacement of a TCI state ID corresponding to a code point. In this embodiment, a situation in which at least one code point is deactivated is assumed.

In step S2007, the UE receives information for updating a mapping of code points to code points for multi-cell scheduling. In this case, the information for updating may be received through signaling having a property different from the information received in step S2003. For example, the information for updating may be received through a MAC CE. Specifically, the UE may receive a MAC CE including at least one of information indicating at least part of values of the configuration information received in step S2003, information indicating deletion or change of the indicated value, and information indicating a replacement value for the indicated value. Accordingly, the UE may avoid a mismatch situation with the mapping of code points to TCI states for single scheduling.

[Example #1-3] Interpretation scheme of TCI state when scheduling a cell supporting multi-TRP operation using m-CC DCI

When a table including CC-specific reference values of each code point of the TCI field in the m-CC DCI is defined as shown in [Table 16], the reference value may correspond to a plurality of TCI state indexes of a specific CC. For example, when multi-TRP operation through the corresponding CC is configured, TCI state indexes per TRP may be linked to code points on the TCI field in the s-CC DCI for the corresponding CC. However, when scheduling the corresponding CC through the m-CC DCI, only scheduling for a single TRP rather than multi-TRP may be allowed. Therefore, when the reference value corresponds to a plurality of TCI state indexes of a specific CC, a rule for interpreting as only one TCI state index being indicated is required.

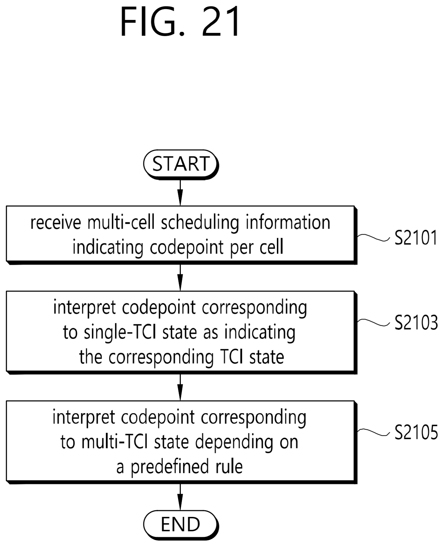

FIG. 21 illustrates an example of a procedure for interpreting TCI state information for multi-cell scheduling according to an embodiment of the present disclosure. FIG. 21 exemplifies a method performed by the UE.

Referring to FIG. 21, in step S2101, the UE receives multi-cell scheduling information indicating cell-specific code points. The multi-cell scheduling information includes a code point for multi-cell scheduling corresponding to a set of code points indicating TCI states of scheduled cells. In this case, the set of code points are reference values indicating at least one TCI state in single-cell scheduling information of each cell. In this embodiment, some of the code points indicate one TCI state, and the rest indicate a plurality of TCI states.

In step S2103, the UE interprets a code point corresponding to a single TCI state as indicating the corresponding TCI state. In other words, the UE determines that the TCI state indicated by a code point for single-cell scheduling mapped to one TCI state is to be applied for communication with the corresponding cell.

In step S2105, the UE interprets a code point corresponding to multiple TCI states according to a predefined rule. In other words, for a cell corresponding to a code point for single-cell scheduling mapped to a plurality of TCI states, the UE may determine validity of scheduling information or may determine an applied TCI state. Here, the determined TCI state may be one of the plurality of TCI states corresponding to the code point, or may be a third TCI state.

As described above with reference to FIG. 21, when a code point indicated by multi-cell scheduling information indicates a plurality of TCI states, the UE may interpret the scheduling information according to a predefined rule and may perform communication. In this case, various embodiments for the predefined rule are as follows.

[Example #1-3-1] A rule may be defined such that only a specific TCI state index among a plurality of TCI state indexes, for example, a predefined one of a first TCI state index or a second TCI state index, is valid. In other words, a rule may be defined such that one of the TCI states (e.g., the first TCI state or the second TCI state) mapped to the corresponding code point is valid. Therefore, in the case of [Example #1-3-1], the UE determines one predefined TCI state among a plurality of TCI states mapped to the code point as valid, and may perform communication with the corresponding cell using the valid TCI state. Accordingly, the UE may transmit a signal to or receive a signal from the base station using the valid TCI state.

[Example #1-3-2] A valid TCI state index among a plurality of TCI state indexes may be configured in advance. That is, in the case of [Example #1-3-2], the UE determines a TCI state having an index designated by the base station among a plurality of TCI states mapped to a code point as valid, and may perform communication with the corresponding cell using the valid TCI state. That is, in the case of [Example #1-3-2], the UE receives information configuring a TCI state (e.g., a first TCI state or a second TCI state) applied in scheduling through multi-cell scheduling for a cell in which a plurality of TCI states are configured, and when the corresponding cell is scheduled in multi-cell scheduling information thereafter, the UE checks the valid TCI state according to the configuration and may transmit a signal to or receive a signal from the base station using the valid TCI state.

[Example #1-3-3] The UE may consider a CC corresponding to a plurality of TCI state indexes among the CC(s) scheduled by the m-CC DCI as invalid. That is, the UE may treat that scheduling is not indicated for the corresponding CC. In the case of [Example #1-3-3], the UE may determine that part of the scheduling information included in the m-CC DCI, that is, scheduling information for a CC corresponding to a code point mapped to multiple TCI states, is invalid. Accordingly, the UE may determine resources related to the corresponding CC among the resources indicated by the received m-CC DCI as unavailable and may not perform communication with the corresponding CC. For example, in the case of downlink, the UE may not attempt decoding. In the case of uplink, the UE may not transmit a signal.

[Example #1-3-4] The UE may consider that a default TCI state index is applied to a CC corresponding to a plurality of TCI state indexes among the CC(s) scheduled by the m-CC DCI. In this case, the default TCI state index may be separately configured in advance by the base station, may be defined as a TCI state index corresponding to the lowest code point of the TCI field in the s-CC for the corresponding CC, may be defined as a TCI state index corresponding to the lowest code point linked to a single TCI state index, or may be defined as a TCI state linked to the lowest CORESET index among at least one most recent TCI state applied for monitoring the s-CC DCI for the corresponding CC. In the case of [Example #1-3-4], the UE determines a default TCI state to be applied to the CC corresponding to the code point mapped to a plurality of TCI states, and may perform communication with the corresponding CC using the default TCI state. In this case, the UE may also perform communication with other CCs scheduled together.

[Example #1-4] Interpretation scheme of TCI state when reference values of CCs are different in TCI mode #2

For CCs or part of CCs that may be scheduled through the m-CC DCI, TCI mode #2 may be configured to be applied. In this case, a restriction may be imposed on the base station such that reference values linked to the corresponding CCs of each code point of the TCI field in the m-CC DCI are always configured to be the same for CCs included in a common cell list. Therefore, when the reference values linked to the corresponding CCs are different, the UE may operate as follows.

[Example #1-4-1] The UE may consider the state as invalid for all CCs scheduled by the m-CC DCI. That is, when the state is indicated, the UE may consider the DCI as inconsistent or may ignore the corresponding DCI.

[Example #1-4-2] The UE may consider only the corresponding CCs among the CC(s) scheduled by the m-CC DCI as invalid. That is, the UE may treat that scheduling is not indicated for the corresponding CCs.

[Example #2] Configuration of a DMRS sequence initialization field

As part of coverage enhancement, a feature in which one of uplink waveforms (e.g., DFT-s-OFDM or CP-OFDM) to be applied is dynamically indicated through a UL grant may be applied to the system. For example, in DCI format 0_1, as shown in [Table 20], a 1-bit field 'transform precoder indicator' for indicating a waveform may be configured. In [Table 20], 'transform precoder is enabled' corresponds to DFT-s-OFDM, and 'transform precoder is disabled' corresponds to CP-OFDM. [Table 20] is a 38.212 CR for Rel-18 coverage enhancement, and is planned to be reflected in the TS 38.212 document.

[Table 20]

- Transform precoder indicator - 0 or 1 bit
    - 1 bit if the higher layer parameter dynamicTransformPrecoderIndicationDCI-0-1 is configured to 'enabled ' and if the UE is configured to monitor DCI format 0_1 with CRC scrambled by C-RNTI or MCS-C-RNTI, where the bit value of 0 indicates that transform precoder is enabled and the bit value of 1 indicates that transform precoder is disabled.
    - 0 bit otherwise.

In addition, according to whether 0 or 1 is indicated through the transform precoder indicator field, sizes of other fields (e.g., precoding information and the number of layers, antenna ports, PTRS-DMRS association, DMRS sequence initialization, etc.) could be different, but in order to unify the overall size of the DCI format, the matters underlined in [Table 21] below have been determined so that sizes of each field affected by an indication value of the transform precoder indicator field (e.g., precoding information and the number of layers, antenna ports, PTRS-DMRS association, DMRS sequence initialization, etc.) are matched to the maximum value.

[Table 21]

- Precoding information and number of layers - number of bits determined by the following:
- 0 bits if the higher layer parameter txConfig = nonCodeBook;
- 0 bits for 1 antenna port and if the higher layer parameter txConfig = codebook;
- 4, 5, or 6 bits according to Table 7.3.1.1.2-2 for 4 antenna ports, if txConfig = codebook, ul-FullPowerTransmission is not configured or configured to fullpowerMode2 or configured to fullpower, transform precoder is disabled, and according to the values of higher layer parameters maxRank, and codebookSubset;
- 4 or 5 bits according to Table 7.3.1.1.2-2A for 4 antenna ports, if txConfig = codebook, ul-FullPowerTransmission = fullpowerMode1, maxRank=2, transform precoder is disabled, and according to the values of higher layer parameter codebookSubset;
- 4 or 6 bits according to Table 7.3.1.1.2-2B for 4 antenna ports, if txConfig = codebook, ul-FullPowerTransmission = fullpowerMode1, maxRank=3 or 4, transform precoder is disabled, and according to the values of higher layer parameter codebookSubset;
- 2, 4, or 5 bits according to Table 7.3.1.1.2-3 for 4 antenna ports, if txConfig = codebook, ul-FullPowerTransmission is not configured or configured to fullpowerMode2 or configured to fullpower, and according to whether transform precoder is enabled or disabled, and the values of higher layer parameters maxRank, and codebookSubset;
- 3 or 4 bits according to Table 7.3.1.1.2-3A for 4 antenna ports, if txConfig = codebook, ul-FullPowerTransmission = fullpowerMode1, maxRank=1, and according to whether transform precoder is enabled or disabled, and the values of higher layer parameter codebookSubset;
- 2 or 4 bits according to Table7.3.1.1.2-4 for 2 antenna ports, if txConfig = codebook, ul-FullPowerTransmission is not configured or configured to fullpowerMode2 or configured to fullpower, transform precoder is disabled, and according to the values of higher layer parameters maxRank and codebookSubset;
- 2 bits according to Table 7.3.1.1.2-4A for 2 antenna ports, if txConfig = codebook, ul-FullPowerTransmission = fullpowerMode1, transform precoder is disabled, maxRank=2, and codebookSubset=nonCoherent;
- 1 or 3 bits according to Table7.3.1.1.2-5 for 2 antenna ports, if txConfig = codebook, ul-FullPowerTransmission is not configured or configured to fullpowerMode2 or configured to fullpower, and according to whether transform precoder is enabled or disabled, and the values of higher layer parameters maxRank and codebookSubset;
- 2 bits according to Table 7.3.1.1.2-5A for 2 antenna ports, if txConfig = codebook, ul-FullPowerTransmission = fullpowerMode1, maxRank=1, and according to whether transform precoder is enabled or disabled, and the values of higher layer parameter codebookSubset;
For the higher layer parameter txConfig=codebook, if ul-FullPowerTransmission is configured to fullpowerMode2, maxRank is configured to be larger than 2, and at least one SRS resource with 4 antenna ports is configured in the SRS resource set

(continued)

indicated by SRS resource set indicator field if present, otherwise in an SRS resource set with usage set to 'codebook', and an SRS resource with 2 antenna ports is indicated via SRI in the same SRS resource set, then Table 7.3.1.1.2-4 is used.

For the higher layer parameter txConfig = codebook, if different SRS resources with different number of antenna ports are configured, the bitwidth is determined according to the maximum number of ports in an SRS resource among the configured SRS resources in all SRS resource set(s) with usage set to 'codebook'. If the number of ports for a configured SRS resource in the set is less than the maximum number of ports in an SRS resource among the configured SRS resources, a number of most significant bits with value set to '0' are inserted to the field.

For the higher layer parameter txConfig = codebook, when the Transform precoder indicator field is present, if the bit width of the Precoding information and number of layers field for the case with transform precoder enabled is not equal to that for the case with transform precoder disabled, a number of most significant bits with value set to '0' are inserted to the Precoding information and number of layers field for the case with smaller bit width until the bit width of the Precoding information and number of layers field for the two cases are the same.

...

- Antenna ports - number of bits determined by the following

- 2 bits as defined by Tables 7.3.1.1.2-6, if transform precoder is enabled, dmrs-Type=1, and maxLength=1, except that dmrs-UplinkTransformPrecoding and tp-pi2BPSK are both configured and $\pi/2$ BPSK modulation is used;

- 2 bits as defined by Tables 7.3.1.1.2-6A, if transform precoder is enabled and dmrs-UplinkTransformPrecoding and tp-pi2BPSK are both configured, $\pi/2$ BPSK modulation is used, dmrs-Type=1, and maxLength=1, where nSCID is the scrambling identity for antenna ports defined in [Clause 6.4.1.1.2, TS38.211];

- 4 bits as defined by Tables 7.3.1.1.2-7, if transform precoder is enabled, dmrs-Type=1, and maxLength=2, except that dmrs-UplinkTransformPrecoding and tp-pi2BPSK are both configured and $\pi/2$ BPSK modulation is used;

- 4 bits as defined by Tables 7.3.1.1.2-7A, if transform precoder is enabled and dmrs-UplinkTransformPrecoding and tp-pi2BPSK are both configured, $\pi/2$ BPSK modulation is used, dmrs-Type=1, and maxLength=2, where nSCID is the scrambling identity for antenna ports defined in [Clause 6.4.1.1.2, TS38.211];

- 3 bits as defined by Tables 7.3.1.1.2-8/9/10/11, if transform precoder is disabled, dmrs-Type=1, and max-Length=1, and the value of rank is determined according to the SRS resource indicator field if the higher layer parameter txConfig = nonCodebook and according to the Precoding information and number of layers field if the higher layer parameter txConfig = codebook;

- 4 bits as defined by Tables 7.3.1.1.2-12/13/14/15, if transform precoder is disabled, dmrs-Type=1, and max-Length=2, and the value of rank is determined according to the SRS resource indicator field if the higher layer parameter txConfig = nonCodebook and according to the Precoding information and number of layers field if the higher layer parameter txConfig = codebook;

- 4 bits as defined by Tables 7.3.1.1.2-16/17/18/19, if transform precoder is disabled, dmrs-Type=2, and max-Length=1, and the value of rank is determined according to the SRS resource indicator field if the higher layer parameter txConfig = nonCodebook and according to the Precoding information and number of layers field if the higher layer parameter txConfig = codebook;

- 5 bits as defined by Tables 7.3.1.1.2-20/21/22/23, if transform precoder is disabled, dmrs-Type=2, and max-Length=2, and the value of rank is determined according to the SRS resource indicator field if the higher layer parameter txConfig = nonCodebook and according to the Precoding information and number of layers field if the higher layer parameter txConfig = codebook.

where the number of CDM groups without data of values 1, 2, and 3 in Tables 7.3.1.1.2-6 to 7.3.1.1.2-23 refers to CDM groups {0}, {0,1}, and {0, 1,2} respectively.

If a UE is configured with both dmrs-UplinkForPUSCH-MappingTypeA and dmrs-UplinkForPUSCH-MappingTypeB, the bitwidth of this field equals max {xA,xB}, where xA is the "Antenna ports" bitwidth derived according to dmrs-UplinkForPUSCH-MappingTypeA and xB is the "Antenna ports" bitwidth derived according to dmrs-UplinkFor-PUSCH-

MappingTypeB. A number of | xA - xB| zeros are padded in the MSB of this field, if the mapping type of the PUSCH corresponds to the smaller value of xA and xB.

When the Transform precoder indicator field is present, if the bit width of the Antenna ports field for the case with transform precoder enabled is not equal to that for the case with transform precoder disabled, a number of most significant bits with value set to '0' are inserted to the Antenna ports field for the case with smaller bit width until the bit width of the Antenna ports field for the two cases are the same.

(continued)

...
- PTRS-DMRS association - number of bits determined as follows
- 0 bit if PTRS-UplinkConfig is not configured in either dmrs-UplinkForPUSCH-MappingTypeA or dmrs-UplinkFor-PUSCH-MappingTypeB and transform precoder is disabled, or if transform precoder is enabled, or if maxRank=1;
- 2 bits otherwise, where Table 7.3.1.1.2-25/7.3.1.1.2-25A and 7.3.1.1.2-26 are used to indicate the association between PTRS port(s) and DMRS port(s) when one PT-RS port and two PT-RS ports are configured by maxNrofPorts in PTRS-UplinkConfig respectively, and the DMRS ports are indicated by the Antenna ports field. When the SRS resource set indicator field is present and maxRank>2, this field indicates the association between PTRS port(s) and DMRS port(s) corresponding to SRS resource indicator field and/or Precoding information and number of layers field according to Table 7.3.1.1.2-25 and 7.3.1.1.2-26. When the SRS resource set indicator field is present and equals "10" and "11" and maxRank=2, the MSB of this field indicates the association between PTRS port(s) and DMRS port(s) corresponding to SRS resource indicator and/or Precoding information and number of layers field, and the LSB of this field indicates the association between PTRS port(s) and DMRS port(s) corresponding to Second SRS resource indicator field and/or Second Precoding information field, according to Table 7.3.1.1.2-25A.

If "Bandwidth part indicator" field indicates a bandwidth part other than the active bandwidth part and the "PTRS-DMRS association" field is present for the indicated bandwidth part but not present for the active bandwidth part, the UE assumes the "PTRS-DMRS association" field is not present for the indicated bandwidth part.

When the Transform precoder indicator field is present, if the bit width of PTRS-DMRS association field for the case with transform precoder enabled is not equal to that for the case with transform precoder disabled, a number of most significant bits with value set to '0' are inserted to the PTRS-DMRS association field for the case with smaller bit width until the bit width of the PTRS-DMRS association field for the two cases are the same.
...
- DMRS sequence initialization - 0 bit if transform precoder is enabled; 1 bit if transform precoder is disabled or if the Transform precoder indicator field is present.

The present disclosure proposes embodiments for configuration of other fields (e.g., DMRS sequence initialization) that may change in relation to this, when scheduling PUSCH on a plurality of serving cells through one DCI and when a transform precoder indicator or a parameter related to dynamicTransformPrecoderIndication is configured for at least one of the serving cells. In the following description, the present disclosure refers to the format of the corresponding DCI as 'DCI format 0_3'. However, the embodiments described below may be applied to other DCI formats.

As the parameter related to dynamicTransformPrecoderIndication is configured for each of the cells scheduled together with respect to DCI format 0_3, a transform precoder indicator field may be included in the corresponding DCI format 0_3. In this case, the transform precoder indicator field may be applied to each serving cell according to at least one of the following types.

- Type-1A: Only one single field is included, and a value indicated through the corresponding field is commonly applied to all cells scheduled together.
- Type-1B: Only one single field is included, and a code point value indicated through the corresponding field corresponds to separate information for each of the cells scheduled together. For example, when the number of cells scheduled together is 2, and in correspondence with a specific code point, DFT-s-OFDM is preconfigured for cell #1 and CP-OFDM is preconfigured for cell #2, when the specific code point is indicated, it may be interpreted that DFT-s-OFDM and CP-OFDM are applied to PUSCH for cell #1 and cell #2, respectively.

Type-1C: Only one single field is included, and a value indicated through the corresponding field is applied only to a specific reference cell among the cells scheduled together (e.g., an RRC-configured cell, a scheduling cell, a cell with the smallest index, a cell with the highest index, etc.).

Type-2: Fields that can indicate for each of the cells scheduled together are listed. For example, when a set of cells scheduled together includes four serving cells and the parameter related to dynamicTransformPrecoderIndication is configured for three serving cells among the four, the corresponding field is composed of 3 bits, and PUSCH waveforms for each serving cell may be individually indicated. For example, bits of the 3-bit information may sequentially correspond to the three serving cells in ascending or descending order of cell indexes.

- Whether it is Type-1A or Type-2 may be configured by higher layer signaling.

For at least one cell among cells belonging to a set of cells scheduled together that may be scheduled through DCI format 0_3 or all scheduled cells indicated by a scheduled cells indicator field/frequency domain resource assignment field, when a parameter related to dynamicTransformPrecoderIndication for DCI format 0_1, DCI format 0_2, and/or DCI format 0_3 is configured or when a transform precoder indicator field is included in DCI format 0_1 and/or DCI format 0_2 for at least one cell, a transform precoder indicator field may be present in the corresponding DCI format 0_3. Therefore, the present disclosure proposes embodiments for configuration of other fields (e.g., DMRS sequence initialization) affected by inclusion of the transform precoder indicator field in DCI format 0 3.

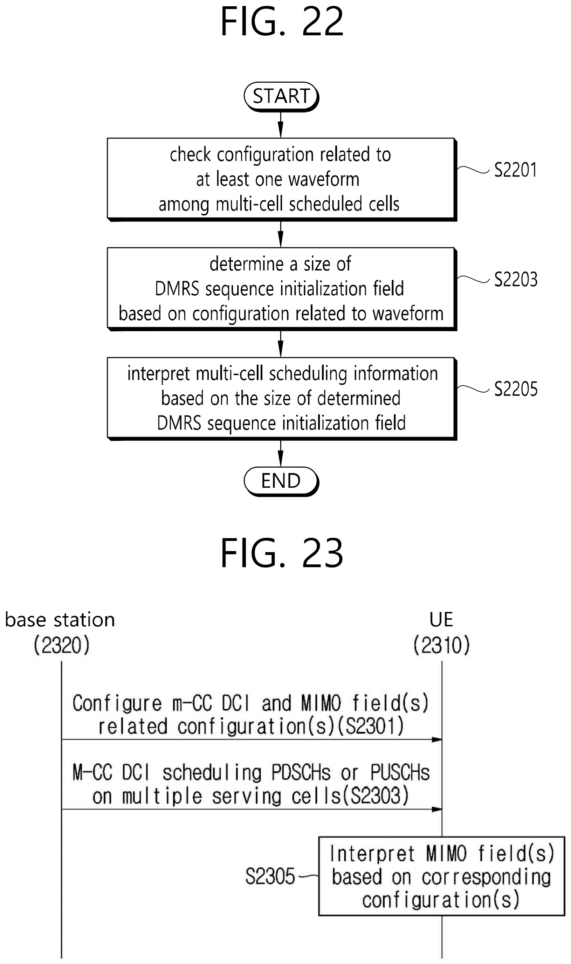

FIG. 22 illustrates an example of a procedure for interpreting multi-cell scheduling information in consideration of the size of a DMRS sequence initialization field according to an embodiment of the present disclosure. FIG. 22 exemplifies a method performed by the UE.

Referring to FIG. 22, in step S2201, the UE checks a configuration related to a waveform for at least one of the multi-cell scheduled cells. The configuration related to the waveform may be determined based on signaled configuration information. For example, the configuration related to the waveform may include whether transform precoding for uplink transmission is enabled.

In step S2203, the UE determines a size of a DMRS sequence initialization field based on the configuration related to the waveform. For example, the size of the DMRS sequence initialization field may differ based on whether transform precoding is disabled for at least one of the scheduled cells or whether transform precoding is enabled for all scheduled cells. Here, the size includes 0 bits, and 0 bits may be understood as absence of the DMRS sequence initialization field.

In step S2205, the UE interprets multi-cell scheduling information based on the determined size of the DMRS sequence initialization field. The structure of the multi-cell scheduling information may differ depending on presence of the DMRS sequence initialization field and the size of the DMRS sequence initialization field. Here, the structure means types, sizes, and arrangements of fields within the information. Therefore, the UE determines the structure of the multi-cell scheduling information based on the determined size of the DMRS sequence initialization field, and interprets the multi-cell scheduling information according to the determined structure. Accordingly, the UE checks information necessary for communication with a plurality of cells and may perform communication.

As in the embodiment described with reference to FIG. 22, the UE may interpret multi-cell scheduling information based on the size of the DMRS sequence initialization field. Here, the multi-cell scheduling information may include DCI format 0_3. For DCI format 0_3, the DMRS sequence initialization field may be configured as shown in [Table 22] below.

[Table 22]

| DMRS sequence initialization - 1 bit. This field is applied to all the scheduled cells indicated by Scheduled cells indicator field or Frequency domain resource assignment field independently. |
| --- |

However, depending on waveform configuration for cells belonging to a set of cells scheduled together that may be scheduled through DCI format 0_3 or all cells indicated by a scheduled cells indicator field/frequency domain resource assignment field, the size of a DMRS sequence initialization field may be determined as 1 bit or 0 bit. Specifically, in the following case, the size of the DMRS sequence initialization field may be determined as 1 bit. - Case #1: When CP-OFDM is configured (e.g., transform precoder is disabled) for at least one of cells belonging to a set of cells scheduled together that may be scheduled through DCI format 0_3 or all cells indicated by a scheduled cells indicator field/frequency domain resource assignment field.

-     Case #2: When a parameter related to dynamicTransformPrecoderIndication for DCI format 0_1, DCI format 0_2, and/or DCI format 0_3 is configured for at least one of cells belonging to a set of cells scheduled together that may be scheduled through DCI format 0_3 or all cells indicated by a scheduled cells indicator field/frequency domain resource assignment field, or when a transform precoder indicator field is present in DCI format 0_1, DCI format 0_2, or DCI format 0_3.

That is, a bit-width of the DMRS sequence initialization field may be determined as 1 bit in the situation of Case #1 or Case #2 described above, and may be determined as 0 bit otherwise. In other words, in the following case, the size of the DMRS sequence initialization field may be determined as 0.

-     Case #3: When DFT-s-OFDM is configured (e.g., transform precoder is enabled) for all cell among cells belonging to a set of cells scheduled together that may be scheduled through DCI format 0_3 or all cells indicated by a scheduled cells indicator field/frequency domain resource assignment field.
-     Case #4: When no parameter related to dynamicTransformPrecoderIndication for DCI format 0_1, DCI format 0_2, and/or DCI format 0_3 is configured for any of cells belonging to a set of cells scheduled together that may be scheduled through DCI format 0_3 or all cells indicated by a scheduled cells indicator field/frequency domain resource assignment field, or when a transform precoder indicator field is not present in DCI format 0_1, DCI format 0_2, and/or DCI format 0_3.

That is, a bit-width of the DMRS sequence initialization field may be determined as 0 bit in the situation of Case #3 or Case #4 described above, and may be determined as 1 bit otherwise. As an example, the corresponding DMRS sequence indicator field in DCI format 0_3 may be configured as follows.

[Table 23]

| DMRS sequence initialization - 1 bit if the Transform precoder indicator field is present or transform precoder is disabled for at least one of the scheduled cells indicated by Scheduled cells indicator field or Frequency domain resource assignment field, otherwise, 0 bit. This field is applied to all the scheduled cells indicated by Scheduled cells indicator field or Frequency domain resource assignment field independently. |
| --- |

FIG. 23 illustrates an example of a procedure for performing communication using multi-cell scheduling information according to an embodiment of the present disclosure. FIG. 23 exemplifies signal exchange between a UE 2310 and a base station 2320.

Referring to FIG. 23, in step S2301, the base station 2320 configures an m-CC DCI for the UE 2310 and transmits configuration information related to MIMO fields (e.g., SRI, TPMI, the number of layers, TCI related, DMRS sequence initialization field, etc.).

In step S2303, the UE 2310 receives an m-CC DCI scheduling PDSCHs or PUSCHs from the base station 2320.

In step S2305, the UE interprets MIMO fields based on the configuration information and may successfully receive or transmit the scheduled PDSCHs or PUSCHs on a plurality of serving cells.

According to various embodiments described above, scheduling for transmission of PDSCHs or PUSCHs on a plurality of serving cells may be supported through one DCI. Accordingly, transmission efficiency of the DCI scheduling PDSCH or PUSCH may be increased.

The proposed schemes described above may be implemented independently, but may also be implemented in a combined (or merged) form of some proposed schemes. Information on whether the proposed methods are applied (or information on rules of the proposed methods) may be defined by a rule such that the base station informs the UE through a predefined signal (e.g., a physical layer signal or a higher layer signal).

The present disclosure may be embodied in other specific forms without departing from the technical idea and essential features described herein. Therefore, the above detailed description should not be interpreted in a limiting sense in all aspects and should be considered as illustrative. The scope of the present disclosure should be determined by a reasonable interpretation of the appended claims, and all modifications within the equivalent scope of the present disclosure are included in the scope of the present disclosure. In addition, claims having no explicit reference relationship in the claims may be combined to constitute an embodiment, or may be included as new claims through amendment after filing.

## INDUSTRIAL APPLICABILITY

The embodiments of the present disclosure may be applied to various wireless access systems. Examples of various wireless access systems include 3GPP (3rd Generation Partnership Project) systems or 3GPP2 systems.

The embodiments of the present disclosure may be applied not only to the above various wireless access systems but also to all technical fields to which the above various wireless access systems are applied. Furthermore, the proposed method may be applied to mmWave and THz communication systems using an ultra-high frequency band.

Additionally, the embodiments of the present disclosure may be applied to various applications such as autonomous vehicles and drones.

## Claims

1. A method performed by a user equipment (UE) in a wireless communication system, the method comprising:

receiving first information for configuring at least one transmission configuration indication (TCI) state per cell;
receiving second information related to a mapping of first type code point to TCI state for a single-cell scheduling;
receiving third information related to a mapping of second type code point to first type code point for a multi-cell scheduling;
receiving downlink control information (DCI) for the multi-cell scheduling; and

41

performing communication with at least one of a plurality of cells based on the DCI,

wherein, when first type code point related to a first cell among first code points indicated by second type code point included in the DCI is mapped to a plurality of TCI states, an operation of determining at least one TCI state applied to the first cell or an operation of determining whether a scheduling of the first cell is valid is performed.

2. The method of claim 1,

wherein, when the first code point related to the first cell is mapped to the plurality of TCI states, one of the plurality of TCI states is treated as a valid TCI state for the first cell.

3. The method of claim 2,

wherein one of the plurality of TCI states is one of a first TCI state or a second TCI state configured for multi-transmission reception point (TRP) operation, and includes a TCI state of a predefined index or a TCI state configured by a base station.

4. The method of claim 1,

wherein, when the first code point related to the first cell is mapped to the plurality of TCI states, a default TCI state for the first cell is treated as a valid TCI state for the first cell.

5. The method of claim 4,

wherein the default TCI state includes a TCI state configured by a base station, a TCI state corresponding to a lowest code point among the first code points for a single-cell scheduling for the first cell, a TCI state corresponding to lowest code point among the first code points related to a single TCI state, or a TCI state related to a lowest control resource set (CORESET) index among at least one TCI state applied for DCI monitoring for a single-cell scheduling for the first cell.

6. The method of claim 1,

wherein, when the first code point related to the first cell is mapped to the plurality of TCI states, the scheduling for the first cell is treated as invalid.

7. The method of claim 1,

wherein, when first type code point related to a second cell among the first code points indicated by the second type code point included in the DCI is in a deactivated state, the scheduling of the DCI is treated as invalid.

8. The method of claim 1,

wherein, when first type code point related to a second cell among the first code points indicated by the second type code point included in the DCI is in a deactivated state, a scheduling for the second cell is treated as invalid.

9. The method of claim 1,

wherein, when first type code point related to a second cell among the first code points indicated by the second type code point included in the DCI is in a deactivated state, a default TCI state for the second cell is treated as a valid TCI state for the second cell.

10. The method of claim 9,

wherein the default TCI state includes a TCI state configured by a base station, a TCI state corresponding to a lowest code point among first code points for a single-cell scheduling for the second cell, a TCI state corresponding to lowest code point among first code points related to a single TCI state, or a TCI state related to a lowest control resource set (CORESET) index among at least one TCI state applied for DCI monitoring for a single-cell scheduling for the second cell.

11. The method of claim 1, further comprising:

receiving a media access control (MAC) control element (CE) including fourth information for updating the mapping of the second type code point to the first type code point configured based on the third information.

12. A user equipment (UE) in a wireless communication system, comprising:

a transceiver; and
a processor connected to the transceiver,
wherein the processor is configured to:

receive first information for configuring at least one transmission configuration indication (TCI) state per cell;

receive second information related to a mapping of first type code point to TCI state for a single-cell scheduling;

receive third information related to a mapping of second type code point to first type code point for a multi-cell scheduling;

receive downlink control information (DCI) for the multi-cell scheduling; and

perform communication with at least one of a plurality of cells based on the DCI,

wherein, when first type code point related to a first cell among first code points indicated by second type code point included in the DCI is mapped to a plurality of TCI states, an operation of determining at least one TCI state applied to the first cell or an operation of determining whether a scheduling of the first cell is valid is performed.

13. A communication device comprising:

at least one processor; and

at least one computer memory connected to the at least one processor and storing instructions that direct operations when executed by the at least one processor, the operations comprising:

receiving first information for configuring at least one transmission configuration indication (TCI) state per cell;

receiving second information related to a mapping of first type code point to TCI state for a single-cell scheduling;

receiving third information related to a mapping of second type code point to first type code point for a multi-cell scheduling;

receiving downlink control information (DCI) for the multi-cell scheduling; and

performing communication with at least one of a plurality of cells based on the DCI,

wherein, when first type code point related to a first cell among first code points indicated by second type code point included in the DCI is mapped to a plurality of TCI states, an operation of determining at least one TCI state applied to the first cell or an operation of determining whether a scheduling of the first cell is valid is performed.

14. A non-transitory computer-readable medium storing at least one instruction, the at least one instruction being executable by a processor, the at least one instruction causing a device, the processor, to:

receive first information for configuring at least one transmission configuration indication (TCI) state per cell;

receive second information related to a mapping of first type code point to TCI state for a single-cell scheduling;

receive third information related to a mapping of second type code point to first type code point for a multi-cell scheduling;

receive downlink control information (DCI) for the multi-cell scheduling; and

perform communication with at least one of a plurality of cells based on the DCI,

wherein, when first type code point related to a first cell among first code points indicated by second type code point included in the DCI is mapped to a plurality of TCI states, an operation of determining at least one TCI state applied to the first cell or an operation of determining whether a scheduling of the first cell is valid is performed.

# FIG. 1

# FIG. 2

# FIG. 3

Radio Frame 10ms

Subframe 1ms

0 | 1 | 2 | 3 | 4 | 5 | 6 | 7 | 8 | 9

Fixed Size

Subframe={1,2,4} Slots

Slot

0 | 1 | 2 | 3

Slot={7,14} Symbols

Symbol

0 | 1 | 2 | 3 | 4 | 5 | 6 | 7 | 8 | 9 | 10 | 11 | 12 | 13

Size depends on subcarrier spacing

Mini-Slot (URLLC)

Mini-Slot={2,4,7} Symbol

# FIG. 4

One Subframe

$14 \cdot 2^\mu$ OEDM Symbol

$k = N_{RB}^\mu N_{SC}^{RB} - 1$

$N_{RB}^\mu N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^\mu - 1$

# FIG. 5

# FIG. 6

Resource grid

A carrier
(up to 3300 subcarriers, i.e, 275 RBs)

A BWP

1 RB=12 subcarrier

1 RE

1 subcarrier

1 symbol

l=0 • • •

k=0

# FIG. 7

# FIG. 8

# FIG. 9

# FIG. 10

# FIG. 11

(a)                                          (b)

# FIG. 12

UE                                                    base station

NZP CSI-RS resource set IE(S610)

receive CSI resource(s) configured
as Repetition 'ON',
through same Tx beam (S620)

| determine Rx beam | ～ S630

skip CSI report  (No report)(S640)

# FIG. 13

UE                                                    base station

NZP CSI-RS resource set IE(S710)

receive CSI resource(s) configured
as Repetition 'OFF',
through different Tx beam (S720)

| determine best beam | ～ S730

repot CSI  (CRI/L1-RSRP)(S740)

# FIG. 14

# FIG. 15

# FIG. 16

# FIG. 17

UE                                                    base station

S1401 — downlink scheduling

DCI (PDCCH) for downlink
scheduling (S1402)

downlink data (PDSCH) (S1403)

# FIG. 18

UE                                                    base station

S1501 — uplink scheduling

DCI (PDCCH) for uplink
scheduling (S1502)

uplink data (PUSCH) (S1503)

# FIG. 19

```
                    ( START )
                        │
                        ▼
    ┌─────────────────────────────────────┐
    │  receive codepoint to TCI state mapping │─── S1901
    │   information for single-cell scheduling │
    └─────────────────────────────────────┘
                        │
                        ▼
    ┌─────────────────────────────────────┐
    │  receive codepoint to codepoint mapping │─── S1903
    │    information for multi-cell scheduling │
    └─────────────────────────────────────┘
                        │
                        ▼
    ┌─────────────────────────────────────┐
    │      receive update information of       │─── S1905
    │      codepoint to TCI state mapping      │
    │        for single-cell scheduling        │
    └─────────────────────────────────────┘
                        │
                        ▼
    ┌─────────────────────────────────────┐
    │  receive multi-cell scheduling information │─── S1907
    │       indicating deleted codepoint       │
    └─────────────────────────────────────┘
                        │
                        ▼
    ┌─────────────────────────────────────┐
    │ interpret multi-cell scheduling information │─── S1909
    │       depending on predefined rule       │
    └─────────────────────────────────────┘
                        │
                        ▼
                    ( END )
```

# FIG. 20

```
                    ( START )
                        │
                        ▼
   ┌─────────────────────────────────────┐
   │  receive codepoint to TCI state mapping  │⌐ S2001
   │  information for single-cell scheduling   │
   └─────────────────────────────────────┘
                        │
                        ▼
   ┌─────────────────────────────────────┐
   │  receive codepoint to codepoint mapping  │⌐ S2003
   │   information for multi-cell scheduling   │
   └─────────────────────────────────────┘
                        │
                        ▼
   ┌─────────────────────────────────────┐
   │       receive update information of       │⌐ S2005
   │       codepoint to TCI state mapping      │
   │          for single-cell scheduling        │
   └─────────────────────────────────────┘
                        │
                        ▼
   ┌─────────────────────────────────────┐
   │       receive update information of       │⌐ S2007
   │      codepoint to codepoint mapping       │
   │          for multi-cell scheduling         │
   └─────────────────────────────────────┘
                        │
                        ▼
                    (  END  )
```

# FIG. 21

START

receive multi-cell scheduling information
indicating codepoint per cell — S2101

interpret codepoint corresponding
to single-TCI state as indicating
the corresponding TCI state — S2103

interpret codepoint corresponding
to multi-TCI state depending on
a predefined rule — S2105

END

# FIG. 22

START

check configuration related to
at least one waveform
among multi-cell scheduled cells — S2201

determine a size of
DMRS sequence initialization field
based on configuration related to waveform — S2203

interpret multi-cell scheduling information
based on the size of determined
DMRS sequence initialization field — S2205

END

# FIG. 23

base station
(2320)

UE
(2310)

Configure m-CC DCI and MIMO field(s)
related configuration(s)(S2301)

M-CC DCI scheduling PDSCHs or PUSCHs
on multiple serving cells(S2303)

S2305 —
Interpret MIMO field(s)
based on corresponding
configuration(s)

## INTERNATIONAL SEARCH REPORT

| International application No. |
| --- |
| **PCT/KR2024/004137** |

**A.    CLASSIFICATION OF SUBJECT MATTER**

**H04W 72/232**(2023.01)i; **H04W 72/231**(2023.01)i; **H04L 5/00**(2006.01)i; **H04W 72/12**(2009.01)i; **H04B 7/0413**(2017.01)i

According to International Patent Classification (IPC) or to both national classification and IPC

**B.    FIELDS SEARCHED**

Minimum documentation searched (classification system followed by classification symbols)

H04W 72/232(2023.01); H04L 5/00(2006.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: single cell scheduling, multiple cell scheduling, code point, TCI state, DCI, multiple-TRP, mapping, MAC-CE

**C.    DOCUMENTS CONSIDERED TO BE RELEVANT**

| Category* | Citation of document, with indication, where appropriate, of the relevant passages | Relevant to claim No. |
| --- | --- | --- |
| A | SAMSUNG. On multi-cell PUSCH/PDSCH scheduling with a single DCI. R1-2301280, 3GPP TSG RAN WG1 #112. Athens, Greece. 17 February 2023.<br>See sections 3-4. | 1-14 |
| A | US 2022-0239433 A1 (LG ELECTRONICS INC.) 28 July 2022 (2022-07-28)<br>See paragraphs [0293]-[0451]; and claim 1. | 1-14 |
| A | ERICSSON. Multi-cell PUSCH/PDSCH scheduling with a single DCI. R1-2301556, 3GPP TSG-RAN WG1 Meeting #112. Athens, Greece. 17 February 2023.<br>See sections 2-3. | 1-14 |
| A | LG ELECTRONICS. Discussion on Multi-cell PUSCH/PDSCH scheduling. R1-2301109, 3GPP TSG RAN WG1 #112. Athens, Greece. 17 February 2023.<br>See sections 2-6. | 1-14 |
| A | US 2023-0075824 A1 (QUALCOMM INCORPORATED) 09 March 2023 (2023-03-09)<br>See paragraphs [0119]-[0122]; and figure 11. | 1-14 |

☐ Further documents are listed in the continuation of Box C.      ☑ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **17 July 2024** | **17 July 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/004137**

| Patent document cited in search report | | | Publication date (day/month/year) | Patent family member(s) | | | Publication date (day/month/year) |
|---|---|---|---|---|---|---|---|
| US | 2022-0239433 | A1 | 28 July 2022 | CN | 113767594 | A | 07 December 2021 |
| | | | | CN | 113767594 | B | 20 October 2023 |
| | | | | EP | 3955502 | A1 | 16 February 2022 |
| | | | | KR | 10-2021-0152578 | A | 15 December 2021 |
| | | | | KR | 10-2023-0014858 | A | 30 January 2023 |
| | | | | KR | 10-2489523 | B1 | 17 January 2023 |
| | | | | KR | 10-2646191 | B1 | 12 March 2024 |
| | | | | US | 11916830 | B2 | 27 February 2024 |
| | | | | US | 2023-0171076 | A1 | 01 June 2023 |
| | | | | WO | 2020-222606 | A1 | 05 November 2020 |
| US | 2023-0075824 | A1 | 09 March 2023 | CN | 117917034 | A | 19 April 2024 |
| | | | | KR | 10-2024-0063878 | A | 10 May 2024 |
| | | | | US | 11832271 | B2 | 28 November 2023 |
| | | | | WO | 2023-039323 | A1 | 16 March 2023 |

Form PCT/ISA/210 (patent family annex) (July 2022)